# EUROPÄISCHE PATENTSCHRIFT

(11) **EP 3 634 865 B1**
(45) Veröffentlichungstag und Bekanntmachung des Hinweises auf die Patenterteilung: **15.12.2021**
(21) Anmeldenummer: 17734249.0
(22) Anmeldetag: 09.06.2017
(51) Int. Cl.: B32B 27/08, B32B 27/10, B29C 53/50, B29C 57/04, B29C 57/12, B31C 3/02, B31C 3/04, B31C 11/02, B32B 1/08, B32B 7/12, B32B 15/08, B32B 15/085, B32B 15/12, B32B 15/20, B32B 27/32, B32B 29/08, B65D 3/14, B65D 3/22, B65D 3/04

(54) **FLUIDBEHÄLTER UND VERFAHREN ZU DESSEN BEDARFSWEISER, ZEITGERECHTER HERSTELLUNG AM ORT DER BEFÜLLUNG**
FLUID CONTAINER AND METHOD FOR THE PRODUCTION THEREOF IN ACCORDANCE WITH DEMAND AND IN A TIMELY MANNER AT THE FILLING LOCATION
CONTENANT DE FLUIDE ET PROCÉDÉ DE PRODUCTION À LA DEMANDE ET EN TEMPS UTILE DE CELUI-CI SUR LE LIEU DE REMPLISSAGE

(43) Veröffentlichungstag der Anmeldung: 15.04.2020
(73) Patentinhaber: ENVICAN GmbH, 8404 Winterthur/Zürich (CH)
(72) Erfinder: DREGGER, Thomas, 40699 Erkrath (DE)
(74) Vertreter: Burgstaller, Peter
(86) Internationale Anmeldenummer: PCT/EP2017/064158
(87) Internationale Veröffentlichungsnummer: WO 2018/224170

(56) Entgegenhaltungen:
- WO-A1-99/59882
- FR-A1- 2 644 754
- FR-A1- 2 791 636
- GB-A- 2 449 747
- JP-A- S5 937 139
- US-A- 3 687 351
- US-A1- 2004 052 987

## Beschreibung

Die Erfindung betrifft einen weitgehend natürlich abbaubaren Fluidbehälter, insbesondere auch einen Getränkebehälter, der auch für ausgasende Dosen-Getränke wie etwa kohlensäurehaltige Mineralwässer, Süßgetränke, Energy-Drinks oder Biere einsetzbar ist, weil er für diese Zwecke als Besonderheit hinreichend druckfest ist. In weiteren, noch stärkeren Ausführungen eignet er sich für Spraydosen aller Art mit noch höheren Innendrucken. Außerdem betrifft die Erfindung ein technisches Herstell- und Logistikverfahren, welches es ermöglicht, dass mit dem Einsatz einer derartigen Getränkedose die Getränkeabfüller und vor allem die Dosenabfüller die Gebinde vor Ort und bedarfsweise herstellen können, im Gleichtakt mit einer bestehenden Abfüllanlage. Damit sparen sie viel Platz und Lagerhaltungskosten und werden unabhängig von der Anlieferung von Leergut. Außerdem müssen herkömmliche Dosenabfüller für die Einführung dieses neuen Fluidbehälters oder Getränkebehälters ihre Dosenabfüll- Anlagen nicht umbauen, sondern können sie nahtlos weiterverwenden. Es wird ihnen die eigene Herstellung der Dosen ermöglicht, und der Platzbedarf hierfür beträgt einen kleinen Bruchteil des Raumbedarfs für die bisher unerlässlichen Pufferlager an leeren Aluminium-Dosen für deren spätere Befüllung. GB2449747A betrifft einen Verpackungsbehälter aus zwei Blättern, welche versetzt zueinander übereinander positioniert werden, sodass zwei Bereiche resultieren, in denen die Blätter nicht überlappen. Die Blätter werden dann gebogen, um die zwei Bereiche übereinander zu positionieren und zu verkleben. WO9959882A1 zeigt einen Fluidbehälter gemäss dem Oberbegriff des Anspruchs 1 und betrifft einen Behälter für kohlensäurehaltige Getränke wie Bier, Schaumweine und alkoholfreie Getränke, welcher vollständig aus pflanzlichem Material wie Karton bestehen kann. In anderen Formen der Erfindung können zusätzliche Schichten aus beispielsweise Kunststoff oder Vliesmaterial bereitgestellt werden. US2004052987 betrifft eine Dose bei der ein primäres Strukturelement eine Schicht aus Papier oder Pappe ist, welche auf jeder Seite mit mindestens einer Abschirmschicht und einer Barriereschicht versehen ist.

Als herkömmliche Getränkebehälter sind von alters her Glasflaschen bekannt, dann in neuerer Zeit Verbundverpackungen und PET-Flaschen sowie Aluminiumdosen, welche speziell für ausgasende Getränke eingesetzt werden, etwa für kohlensäurehaltige Getränke sowie Biere. Dies deshalb, weil bei diesen ausgasenden Getränken im Behälterinnern erhebliche Drucke entstehen, bis zu 11 bar, und bisher - wenn es um Dosen geht - nur den Aluminiumdosen die nötige Druckfestigkeit zugeschrieben wurde. Aluminiumdosen sind deshalb heute sehr weit verbreitet. Der Weltmarkt für solche Getränkedosen umfasst jährlich ca. 300 Milliarden Einheiten und wächst kontinuierlich mit 2-4% p.a. (Quelle: Beverage Can Makers Europe BCME 2015). Drei grosse Aluminiumdosen-Anbieter dominieren den Markt und in den letzten Jahren wurden kaum Innovationen auf diesem Gebiet gesehen.

Die bekannten Getränkedosen bestehen aus Aluminium bzw. Weißblech. Ihre Herstellung, ihre Logistik, Befüllung und ihre Rezyklierung sind heute als ausgereift zu bezeichnen, was der enorme Absatz von ca. 300 Milliarden Dosen im Jahr beweist. Dennoch haben diese Getränkedosen systeminhärente Nachteile. Erstens erfordern sie einen hohen Ressourcen-Verschleiß. Aluminium ist im Grundsatz kein billiges Erzeugnis. Seine Herstellung verschlingt große Energiemengen und lange Transportwege müssen überwunden werden, vom Abbau von Bauxit bis hin zur Auslieferung einer fertigen leeren Aluminiumdose an einen Dosenabfüller. Alu-Dosen wurden auch schon als "kalte Energie" bezeichnet. Eine einzelne 355ml Aludose entspricht einem Energiegegenwert von mehr als 1dl Benzin! Die Aluminiumdose trat dennoch einen weltweiten Siegeszug an, weil sie druckfest ist, das heißt sie kann bedenkenlos für ausgasende Getränke eingesetzt werden, in denen bis zu 11 bar Druck entsteht, und der für andere Anwendungen anstelle von Getränken, etwa für Sprays etc. noch erheblich höher liegen kann. Auf jeden Fall sind das Drucke, welche Verbundpackungen nicht aufnehmen können und die beim Einsatz von PET-Flaschen kritisch sein können. Von explodierten PET-Flaschen hat wohl schon jedermann gehört. Außerdem sind Alu-Getränkedosen sehr stabil, handlich und es braucht verhältnismäßig große Krafteinwirkungen, dass sie undicht werden. Sie werden denn auch nicht bloß für Getränke, sondern auch für Sprays aller Art eingesetzt, für Farbsprays, Haarsprays, Aerosole etc. und es gibt daher diverse Spraydosen verschiedener Größen für allerlei Wirkstoffe, etwa gegen Insekten, als Reinigungsmittel etc.

Viele weiterdenkende Konsumenten empfinden es aber schon rein gefühlsmäßig als wenig sinnreich und gar verschwenderisch, für die temporäre Verpackung von zum Beispiel bloß 2.5 dl eines Getränkes eine ganze Aluminiumdose einzusetzen, die nach ein paar Schlucken daraus leergetrunken ist und weggeworfen wird. Es kommt dazu, dass dieses Wegwerfen allzu oft achtlos erfolgt. Eine Aluminiumdose, in die freie Natur hinaus weggeworfen, bleibt dort liegen, bis sie jemand wegräumt. Sie verrottet und verrostet nicht, sondern bleibt über enorme Zeiträume erhalten, ja sie ist fast unzerstörbar. Zunehmend wird auch von Fällen berichtet, in denen Wild- und vor allem Nutztiere kleine Bruchstücke von Aluminiumdosen beim Weiden verschlucken und daran elendiglich zugrunde gehen oder vom Eigentümer abgetan werden müssen, weil diese Teile unverdaubar sind und die inneren Organe der Tiere verletzen. Schließlich ist der Anblick jeder achtlos weggeworfenen Aluminiumdose, ob in städtischen oder bewohnten Gebieten, oder erst recht in der Natur, für jeden vernünftigen Menschen verstörend und ein großes Ärgernis. Leider gibt es genügend Zeitgenossen, welche sich darüber keine Gedanken machen. Die vielen in dieser Art weggeworfenen leeren Aludosen, etwa um Bahnhöfe oder Getränkestände herum am Boden liegend, sind ein trauriger Beweis dafür. Im Grundsatz tragen die Aluminiumdosen mit einem beachtlichen Teil zum Haushaltmüll bei. Während eine PET-Flasche durch ihre Verbrennung im Volumen zu annähernd Null reduziert wird, oder aber einigermaßen rationell rezyklierbar ist, trägt eine Alu-Dose mit einem im Verhältnis zu ihrem vormaligen Inhalt großen Volumen zum Haushaltmüll bei. Wenngleich der reine Gewichtsanteil an Aludosen am wiederverwertbaren Abfall nur ca. 1.9% beträgt, so macht der Gewichtsanteil an den Emissionen pro Tonne von am Schluss daraus erzeugter deponierbarer Abfallschlacke 14% dieser Emissionen aus, gemäß dem Container Recycling Institute, 4361 Keystone Ave., Culver City, CA 90232, USA. Getränkebehältnisse aus solchen Materialien, welche derartige Abfallmengen und ein energieaufwändiges Recycling nötig machen, werden dem Aspekt der Nachhaltigkeit in der heutigen Zeit nicht mehr gerecht, insbesondere da der von der Bevölkerung produzierte Verpackungs- und Haushaltmüll stetig zunimmt und heute weltweit bei ca. 16km3 pro Tag liegt - einem Würfel mit einer Kantenlänge von etwas mehr als 2.5km!

Ein weiterer, wesentlicher Aspekt betrifft die Logistik im Zusammenhang mit den Getränkebehältern. Gemäß heutiger Praxis werden die Aluminiumdosen an einem geeigneten Ort zentral hergestellt und in leerem Zustand zu den verschiedenen Dosenabfüllern angeliefert. Man transportiert notgedrungen enorme Mengen von Leergut und somit Luft in der Landschaft herum, was wenig sinnvoll ist. Weil die Dosenabfüller stets genügend Leergut vorrätig haben müssen, um Engpässe beim Abfüllen sicher zu vermeiden, sind sie zum Unterhalt großer Lager mit entsprechendem Raumbedarf und zu einer entsprechenden Kapitalbindung gezwungen. Die Dosen werden dann vor Ort befüllt und vom Abfüllerbetrieb mit einem Deckel verschlossen.

Der Erfindung liegt deshalb die Aufgabe zugrunde, auf konstruktiv einfache Weise und kostengünstig einen Fluidbehälter zu schaffen, unter anderem geeignet als Getränkedose, welcher dem Prinzip der Nachhaltigkeit entspricht, das heißt größtenteils aus nachwachsendem Material hergestellt ist, und dessen Dosenkörper in der Natur abbaubar und einfach zu rezyklieren ist. Dieser Fluidbehälter soll auch hitzebeständig sein, sodass darin abgefüllte Getränke pasteurisierbar sind. Weiter soll der Fluidbehälter bedarfsweise zeitgerecht und ohne großen Platzbedarf dezentral mit geringem technischen und energetischen Aufwand bei einem Dosenabfüller-Betrieb herstellbar sein, wobei seine Herstellung auch in Echtzeit mit einer Abfüllanlage koppelbar sein soll, und er soll zudem kostengünstiger herstellbar sein als eine Aludose.

Die Aufgabe umfasst auch, ein Verfahren zur Herstellung eines solchen Fluidbehälters am Ort der Befüllung aufzuzeigen und anzugeben. Dieses Verfahren soll ohne großen Raumbedarf, mit wenig technischem Aufwand und energiearm umsetzbar sein, und es soll jederzeit unterbrechbar sein und somit eine zeitgerechte, bedarfsweise Herstellung ermöglichen, sodass die Herstellung direkt und im Gleichtakt mit der nachfolgenden Befüllung der Dosen an eine konventionelle Abfüllstation koppelbar ist. Dabei sollen auch Dosen für verschiedene Füllmengen auf ein und derselben Anlage herstellbar sein, je nach momentanem Bedarf. Die Produktionsanlage für die Herstellung der Dosen soll also in die bestehenden Anlagen von Dosen-Abfüllbetrieben für die Befüllung herkömmlicher Aludosen integrierbar sein.

Diese Aufgabe wird zunächst gelöst von einem Fluidbehälter gemäß Anspruch 1. anliegen und miteinander verschweißt sind und dann auf eine Seite auf die Lage umgelegt und mit ihr verleimt sind, während bei jeder weiteren Lage deren Randbereiche in Wickelrichtung überlappen, wobei die überlappenden Bereiche über ihre Dicke schiefwinklig in eine Schrägfläche oder eine Stufe bildend zugeschnitten oder zugeschliffen sind, sodass die überlappenden Bereiche formschlüssig aufeinander liegen und die überlappenden Bereiche nicht dicker ausfallen als die Dicke des Kartonverbund-Materials selbst, und dass die Verbindungsnähte der mindestens zwei Lagen von Kartonverbund-Material in Bezug auf den Umfang der Wicklungen an versetzten Stellen liegen, und weiter dass die eine Seite des so gebildeten offenen Hohlzylinders mit einem Bodenelement verschlossen ist, und die andere offene Seite des Hohlzylinders bzw. Dosenkörpers nach Befüllung mit einem Deckel mit Verschluss in gleicher Weise verschließbar ist bzw. verschlossen ist.

Die Aufgabe wird des Weiteren gelöst von einem Verfahren gemäß Anspruch 13.

Ein solchermaßen hergestellter Fluidbehälter, namentlich eine solche Getränkedose mit diesen Eigenschaften, bietet den Vorteil, dass durch die weitgehende Verwendung von nachwachsenden Rohstoffen und FSC^{©}-zertifizierten Getränkekartonschichten signifikant geringere CO2-Werte und eine bessere Umweltbilanz als solche bei Aluminiumdosen erreicht werden. Die Kartondose ist dabei 100% rezyklierbar. Der Dosenkörper ist abbaubar, und die Deckel- und Bodenelemente sind rezyklierbar. Bisher bestand in der einschlägigen Branche der gewichtige Vorbehalt, dass mit einer Dose aus einem abbaubaren, nichtmetallischen Material die geforderte Druckfestigkeit nicht zu erreichen sei, jedenfalls nicht dauerhaft und nicht sicher genug. Doch nach mehreren Jahren der Entwicklung gelang es nun, einen solchen Behälter mit hinreichender Druckfestigkeit herzustellen, der dazu noch marktkonform gestaltbar ist und nahtlos in die Anlagen zum nachgelagerten Befüllen der Dosen integrierbar ist.

Anhand der Zeichnungen wird das Herstellverfahren erklärt und der Aufbau dieses Fluidbehälters wird anhand von Beispielen von Getränkedosen gezeigt und beschrieben. Weitere Einzelheiten, Merkmale und Vorteile des Gegenstandes der Erfindung ergeben sich aus der nachfolgenden Beschreibung im Zusammenhang mit diesen Zeichnungen, in welchen beispielsweise bevorzugte Ausführungen des erfindungsgemäßen Fluidbehälters in Form von Getränkedosen dargestellt ist.

Die Figuren zeigen im Einzelnen das Folgende:
Figur 1: eine Einzelteildarstellung des erfindungsgemäßen Fluidbehälters in Form einer Getränkedose gemäß einer ersten Ausführungsform;
Figur 2: eine schematische Schnittdarstellung durch eine Getränkedose aus Figur 1 aus zwei stark vergrößert dargestellten Lagen hergestellt;
Figur 3: eine schematische Schnittdarstellung durch eine Getränkedose gemäß einer zweiten, dreilagigen Ausführungsform mit stark vergrößert dargestellten Lagen;
Figur 4: eine schematische Schnittdarstellung durch eine Getränkedose zum Aufzeigen, wie die innerste, auf ihrer Innenseite mit einem Barrierematerial als Dichtmaterial beschichtete, stark vergrößert dargestellte Lage auf einen Dorn gewickelt wird, mit den beiden zu verschweißenden und nach außen ragenden Rändern der Barrierematerial-Schicht;
Figur 5: eine schematische Schnittdarstellung durch eine Getränkedose zum Zeigen, wie diese innerste Lage auf Stoß zusammengefügt wird und die Barrierematerial-Schicht außen geführt, dann zusammengeschweißt und hernach auf die Außenseite der Lage umgelegt und darauf geschweißt ist;
Figur 6: eine schematische Schnittdarstellung durch eine Getränkedose mit einer ersten Lage mit auf ihrer Innenseite einer Barriereschicht, wobei die beiden Randbereiche der Lage die Wicklung überlappen, nach außen geführt sind, dann mit den Barriereschichten zusammengeschweißt sind und dann mittels Leim auf die gewickelte Lage umgelegt und verleimt werden;
Figur 7: eine schematische Schnittdarstellung durch eine Getränkedose mit einer weiteren umwickelten, stark vergrößert dargestellten Lage mit einer zum Stoß versetzten Naht aus abgestuften, einander überlappenden Randbereichen zum Verkleben derselben;
Figur 8: eine schematische Schnittdarstellung durch eine Getränkedose mit einer weiteren, dritten umwickelten, stark vergrößert dargestellten Lage mit einer Naht aus abgestuften, einander überlappenden Randbereichen zum Verkleben derselben auf der zur Naht der Zwischenlage gegenüberliegenden Seite des Umfangs angeordnet;
Figur 9: Den ersten Schritt für die Herstellung einer Getränkedose, nämlich das Abwickeln von Karton oder Kraftpapier für ein zu erstellendes Kartonverbund-Material bzw. Laminat;
Figur 10: Die Verbindung der beiden in Wickelrichtung liegenden Randbereiche einer gewickelten Lage von Kartonverbund-Material über eine gezielt abgeschliffene Schrägfläche;
Figur 11: Die Verbindung der beiden in Wickelrichtung liegenden Randbereiche einer gewickelten Lage von Kartonverbund-Material über eine gezielt geschnittene oder geschliffene Stufe im Randbereich;
Figur 12: Den zweiten Schritt für die Herstellung einer Getränkedose, nämlich das Verleimen der Innenseite der äußersten Lage von Kartonverbund- Material mit der Außenseite der mittleren Lage, sowie das mit Leim Beschichten der Innenseite der mittleren Lage;
Figur 13: Das Erzeugen der verschweißten Nähte nach Umwicklung eines stationären Dorns mit der innersten Lage von Kartonverbund-Material und die Weiterbeförderung der Umwicklung auf dem Dorn;
Figur 14: Die anschließende Umwicklung eines stationären Dorns mit dem mehrlagigen Kartonverbund-Material zur Erzeugung von weiteren verleimten Umwicklungen auf die bereits aufgebrachte innerste, verschweißte Wickel-Lage;
Figur 15: Das Abschneiden von Rohrabschnitten als beidseits offene Dosenkörper in gewünschter Länge durch eine getaktet mitfahrende Guillotine;
Figur 16: Das Ausweiten des Dosenkörper-Randes mittels einer Stahlrolle auf dem abgerundeten Innenrand eines Stahl-Hohlzylinders;
Figur 17: Das Verschließen der einen, offenen Seite des Dosenkörpers mit einem Dosenboden im Moment des Zuführens des Bodens mit radial auskragendem Randbereich für die Bördelung;
Figur 18: Das Umbördeln des Boden- oder Deckelrandes gemeinsam mit der radialen Auskragung des Dosenbodens am offenen Ende des Dosenkörpers;
Figur 19: Eine andere Boden- bzw. Deckelvariante mit vorgeformter Kontur in einem diametrischen Schnitt dargestellt, mit einem Dichtring auf Silikonbasis;
Figur 20: Das Verschließen der einen, offenen Seite der Dosenkörper mit einem Dosenboden in einer Rundtakt-Anlage;
Figur 21: Das Befüllen der einseitig mit einem Boden verschlossenen Rohrabschnitte nach Drehen ihrer offenen Seite nach oben in einer Rundtakt-Anlage;
Figur 22: Das Verschließen der oberen Seite des befüllten Dosenkörpers mit einem Deckelelement mit integriertem Verschluss in einer Rundtakt- Anlage;
Figur 23: Die fertige Dose in einem Längsschnitt im Aufriss dargestellt, mit den gebördelten dichten Rändern am Boden und Deckel.

Bevor auf die einzelnen Figuren eingegangen wird, soll der erfindungsgemäße Fluidbehälter ganz allgemein beschrieben werden und seine Vorteile sollen erwähnt werden: Der Fluidbehälter, insbesondere auch in seiner Ausführung als Getränkedose, ist als Druckbehältnis ausgebildet und weist hierzu einen hohlzylinderförmig ausgebildeten Dosenkörper auf, der einen Innenraum zur Aufnahme eines Getränks umfasst, ein Bodenelement und ein Deckelelement, wobei das Bodenelement ein erstes Längsende des hohlzylinderförmig ausgebildeten Dosenkörpers verschließt und das Deckelelement ein zweites Längsende des hohlzylinderförmig ausgebildeten 10 Dosenkörpers verschließt. Der Dosenkörper schließt wenigstens eine gewickelte Innenmateriallage und eine gewickelte Außenmateriallage ein, also mindestens zwei Umwicklungen oder Lagen von Kartonverbund-Material bzw. Kraftpapier, wobei sich die Lagen entweder exakt um 360° erstrecken, oder in einer anderen Ausführung um etwas mehr als eine ganze Umwicklung erstrecken. Kombinationen von Lagen mit exakt einer Umwicklungslänge und solchen mit etwas mehr sind möglich. Diese Lagen werden im rechten Winkel zur Achse des zu erzeugenden Dosenkörpers gewickelt, was eine maximale Druckfestigkeit ergibt, weil dann die nötigen Überlappungen und somit die Nähte eine minimale Länge aufweisen. Schraubenlinienförmige Wicklungen, bei denen die Längsränder der aufgewickelten Bänder zu knappen Überlappungen und Nähten zusammengefügt sind, bedingen hingegen längere Nähte. Solche Wicklungen werden auch als spiralförmige Wicklungen bezeichnet und man findet sie bisher etwa an zylindrischen Tischbomben oder Behältern für darin aufeinander gestapelte Chips oder als Behälter für allerlei andere geeignete Waren. Die gewickelte Innenmateriallage der jetzt aber erstmals druckfesten und hitzebeständigen Dose weist eine axial verlaufende Innennaht auf und ist von einem Kartonverbundmaterial bzw. einer Kraftpapierschicht gebildet, welche einseitig auf der dem Doseninnenraum zugewandten Seitenfläche mit einem gas- und aromadichten Barriereverbund beschichtet ist, und die gewickelte Außenmateriallage weist eine Außennaht auf und ist von einer Kraftpapierschicht gebildet, wobei die durch die Überlappung gebildete Naht gegenüber jener der Innenmateriallage in Bezug auf den Umfang der Dose versetzt angeordnet ist. Beim Vorhandensein einer dritten Lage von Kartonverbund-Material ist deren Überlappung bzw. Naht gegenüber der Naht der dann mittleren Lage abermals in Bezug auf den Umfang der Dose versetzt angeordnet.

Mit diesem Fluidbehälter wird auf konstruktiv einfache Weise und kostengünstig ein Getränkebehältnis bzw. eine zylindrische Getränkedose bereitgestellt, welche sich durch einen einfachen Aufbau auszeichnet und welche sich durch die Verwendung von rezyklierbaren Materialien auszeichnet. Eine solche Getränkedose kann überraschenderweise hinreichend druckfest gestaltet und hergestellt werden, insbesondere indem sie aus mehreren Lagen und Umwicklungen besteht, sodass sie auch für kohlensäurehaltige Getränke genauso wie für nicht-kohlensäurehaltige Getränke einsetzbar ist und ohne Weiteres Drucke von bis zu 11 bar aushält, obwohl sie vornehmlich aus bloßem Kartonverbund-Material hergestellt ist. Bis auf eine minimale Innenbeschichtung besteht sie also komplett aus Kartonmaterial oder Kraftpapier, so dass das Getränkebehältnis im Vergleich zu beispielsweise aus Weißblech bestehenden Getränkedosen wesentlich umweltfreundlicher und leicht zu entsorgen ist und einfach in die Altpapiertonne gegeben werden kann. Diese Getränkedose ist außerdem lebensmittelrechtlich unbedenklich. Der Dosenkörper besteht gemäß der Erfindung aus Karton oder gar aus Papier, nämlich einem Kraftpapier, und nicht mehr aus Aluminium. Durch eine Versiegelung der Innenmateriallage mit Hilfe eines üblichen Barriereverbundes ergibt sich eine perfekt dichte Dampf-, Aroma, Fett- und Sauerstoffbarriere. Dieser Barriereverbund wird mittels eines Heißgießverfahrens durch einen Extruder aufgebracht. Als Material für den Barriereverbund eignet sich eine Polyolefin-Schicht und wenigstens eine Schicht eines Haftvermittlers. Bedarfsweise kann zusätzlich eine Schicht aus Aluminium eingesetzt werden, wobei dann das Flächengesamtgewicht dieser innersten Lage ca. 60 g/m2 bis 130 g/m2 aufweist. In einer weiteren Alternative kann der Barriereverbund zusätzlich eine Schicht aus Ethylen-Vinylalkohol-Copolymer umfassen, womit ein Flächengesamtgewicht von 50 g/m2 bis 100 g/m2 erreichbar ist.

Die Kraftpapierschicht der Außenmateriallage ist einseitig auf der dem Dosensinnenraum abgewandten Seite mit einer Polyolefin-Schicht beschichtet. Die Verwendung dieses Materials kommt ebenfalls der Nachhaltigkeit des Getränkebehältnisses zugute. Diese Polyolefin-Schicht weist ein Flächengewicht von wenigstens 10 g/m2 und von höchstens 50 g/m2 auf und besteht aus Polyethylen PE oder Polyethylenterephthalat PET. Als ideal hat sich ein Flächengewicht von 20 g/m2 erwiesen. Dabei kann die vorteilhafte Barrierewirkung von Polyethylenterephthalat PET genutzt werden. Ferner erlaubt dieses Material, die daraus hergestellte Getränkedose wesentlich einfacher zu rezyklieren. Diese Getränkedose liefert deshalb einen wichtigen Beitrag zur Schonung der Umwelt und zur Reduktion von Entsorgungsmüll. Dieser Fluidbehälter ist dabei nicht nur auf die Form einer Getränkedose begrenzt. Es sind auch andere Formen denkbar, als welche der Fluidbehälter ausgebildet sein kann. Gerade als Getränkedose und weil diese in so großer Anzahl in Umlauf gebracht werden, entspricht er aber wesentlich mehr den Forderungen nach Nachhaltigkeit von Verpackungen als bekannte Dosen aus Aluminium. 12

Im Hinblick darauf, dass die Getränkedose als Verpackung dient und dementsprechend der Wunsch besteht, den Inhalt außenseitig zu kennzeichnen, ist die Kraftpapierschicht der Außenmateriallage einseitig auf der dem Doseninnenraum abgewandten äußeren Seite wasserfest bedruckbar oder lackierbar ausgebildet. Somit stehen Außenflächen zur Verfügung, auf dieselben Werbebotschaften gedruckt oder lackiert werden können. Die gewickelte Innenmateriallage und die gewickelte Außenmateriallage sind vorzugsweise vollflächig miteinander verleimt. Auf diese Weise wird sichergestellt, dass die Nähte in Bezug auf dem Umfang der Dose relativ versetzt zueinander angeordnet verbleiben und die Druckfestigkeit wird erhöht.

Um die Stabilität dieses Fluidbehälters bzw. dieser Getränkedose auf umweltfreundliche Art und Weise zu erhöhen, wird vorteilhaft eine Dreifach-Umwicklung erzeugt, indem zwischen der gewickelten Innenmateriallage und der gewickelten Außenmateriallage wenigstens eine gewickelte Zwischenmateriallage aufgebracht wird, die ebenfalls von einer Kraftpapierschicht gebildet ist, wobei die Innenmateriallage, die wenigstens eine Zwischenmateriallage und die Außenmateriallage an den sich gegenüberliegenden Kraftpapierschichten vollflächig miteinander verleimt werden. Die wenigstens eine gewickelte Zwischenmateriallage weist eine Zwischennaht auf, die relativ zu der Innennaht und der Außennaht in Bezug den Umfang der Wicklung versetzt angeordnet ist. Die versetzte Anordnung von Innennaht, Zwischennaht und Außennaht erweist sich als besonders vorteilhaft im Hinblick auf die Dichtigkeit und Druckbeständigkeit für die Befüllung mit kohlensäurehaltigen Getränken.

Besonders vorteilhaft erweist sich ein Barriereverbund aus einer Polyolefin- Schicht mit wenigstens einer Schicht eines Haftvermittlers. Zur Erhöhung der mechanischen Stabilität der Innenmateriallage, wenn es um das Erreichen einer besonders hohen Druckfestigkeit geht, für Drucke von 11bar und mehr, kann der Barriereverbund zusätzlich eine Schicht aus Aluminium umfassen und ein Flächengesamtgewicht von wenigstens 60 g/m2 und von höchstens 130 g/m2 aufweisen. Durch die Materialwahl erhöht sich das Gewicht des Fluidbehälters aber nur unwesentlich, wohingegen die Innenmateriallage durch eine geeignete Materialwahl an Zähigkeit gewinnt. 13

Alternativ kann zur Erhöhung der mechanischen Stabilität für den Barriereverbund statt eine einzelne Schicht aus Aluminium zusätzlich eine Schicht aus Ethylen-Vinylalkohol-Copolymer eingesetzt werden, und das Flächengesamtgewicht beträgt dann wenigstens 50 g/m2 und höchstens 100 g/m2. Ethylen-Vinylalkohol- Copolymer weist darüber hinaus die zur Bildung einer Barriere notwendigen Eigenschaften auf. In einer weiteren alternativen Ausführung mit erhöhter mechanischer Stabilität kann als Barriereverbund zusätzlich eine Schicht aus Polyvinylalkohol eingesetzt sein, mit einem Flächengesamtgewicht von wenigstens 50 g/m2 und höchstens 100 g/m2. Dabei besitzt Polyvinylalkohol eine hohe Zugfestigkeit und Flexibilität.

Im Hinblick auf ein niedriges Gesamtgewicht des Fluidbehälters eignet sich eine Kraftpapierschicht mit einem Flächengewicht von wenigstens 60 g/m2 und von höchstens 180 g/m2. Das Bodenelement und/oder das Deckelelement werden für eine gute Druckfestigkeit der Dose aus Metall, vorzugsweise aus Aluminium hergestellt, wie herkömmlich. Auf diese Weise kann die mechanische Stabilität des Dosenkörpers erhöht werden, ohne dass dazu die Mantelfläche des Dosenkörpers durch eine zusätzliche Lage oder durch Verwendung eines entsprechend stabileren Materials zu verstärken ist. Dieser Fluidbehälter bietet infolge seines Baumaterials und seiner Herstellung auch eine solche Hitzebeständigkeit, dass darin abgefüllte Getränke, etwa im Falle von Milch, durch Erhitzung pasteurisierbar sind.

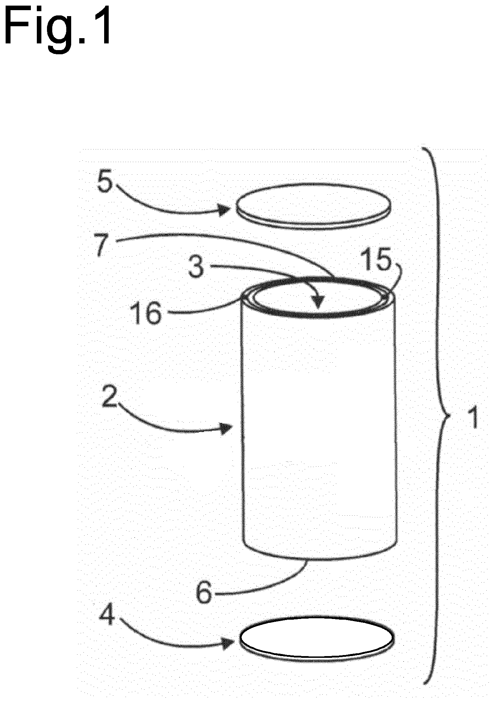

Im Folgenden werden die einzelnen Figuren näher beschrieben und erläutert. In Figur 1 ist ein erfindungsgemäßer Fluidbehälter in Form einer Getränkedose 1 in einer schematischen Einzelteildarstellung gezeigt. Die Getränkedose 1 umfasst einen Rohrabschnitt bzw. einen hohlzylindrischen Dosenkörper 2 mit einem zur Aufnahme des Getränkes dienenden Doseninnenraum 3, sowie ein Bodenelement 4 und ein Deckelelement 5. Das Bodenelement 4 dient dazu, ein erstes Längsende 6 des Dosenkörpers 2 zu verschließen, wobei das Deckelelement 5 dazu vorgesehen ist, ein zweites Längsende 7 des Dosenkörpers 2 zu verschließen. Das Bodenelement 4 und das Deckelelement 5 sind aus Metall hergestellt, vorzugsweise aus Aluminium. Diese Getränkedose 1 kann eine Höhe von 100 mm bis zu 250 mm bei einem Durchmesser von 35 mm bis 600 mm aufweisen, wobei eine Höhe von 100 mm bei einem Durchmesser von 45 mm bis 70 mm bevorzugt ist. 14

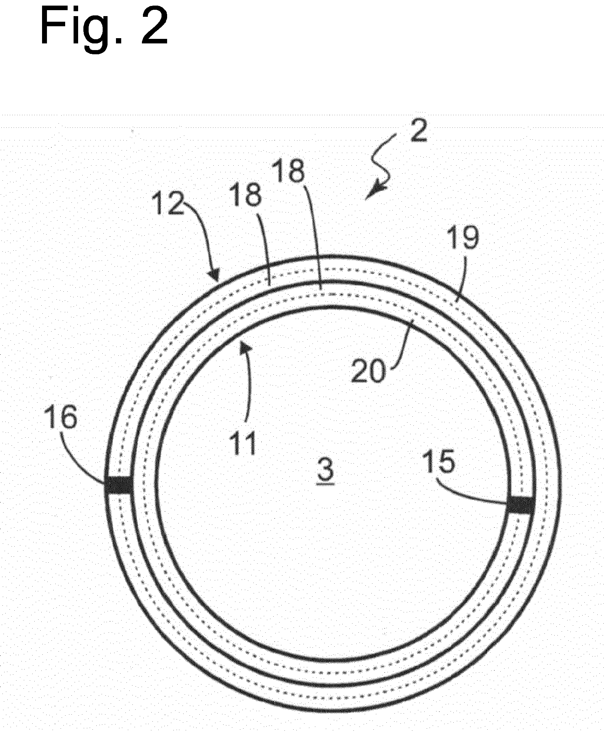

Die Figur 2 zeigt eine erste Variante mit einem zweilagigen Dosenkörper in einem Querschnitt, mit stark vergrößert dargestellten Lagen, im Grundsatz. Eine erste Kraftpapierschicht 18 mit einer inliegenden Polyolefinschicht als Barriereverbund wurde als innere Lage 11 um einen zentralen zylinderförmigen Stahldorn gewickelt und mit einer ersten Naht 15 wurden die in Wickelrichtung liegenden Ränder verleimt oder verschweißt. Eine zweite Kraftpapierschicht 18, ebenfalls mit inliegender Polyolefinschicht als Barriereverbund, wurde hernach als äußere Materiallage 12 auf die erste Lage 11 gewickelt, und zwar so, dass die in Wickelrichtung liegenden Ränder mit der Naht 16 an einer der Naht 15 gegenüberliegenden Seite des Dosenkörpers 2 verschweißt oder verleimt sind, sodass ein Dosenkörper 2 mit hohlem Doseninnern 3 entstand.

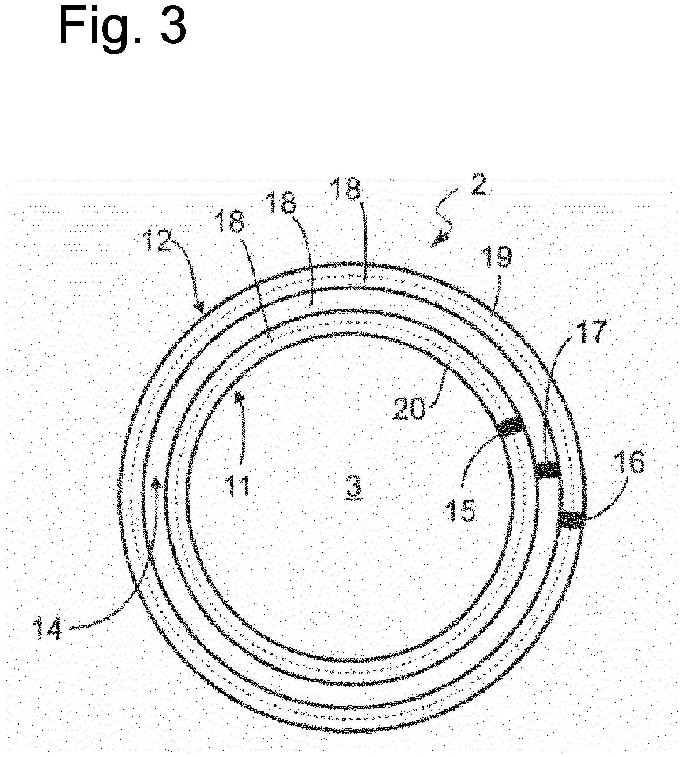

In Figur 3 ist eine zweite Ausführungsform des Getränkebehältnisses 1 in einem Querschnitt durch den Dosenkörper 2 gezeigt, so dass ersichtlich ist, dass sich diese zweite Ausführungsform von der ersten Ausführungsform nach Figur 2 lediglich durch den Aufbau des Dosenkörpers 2 unterscheidet, der bei dieser zweiten Ausführungsform aus drei Materiallagen 11, 14, 12 besteht, statt nur aus zwei Lagen. Die nachstehende Beschreibung gilt für beide Ausführungsformen, wobei die Unterschiede zwischen den beiden Ausführungsformen angesprochen werden.

Bei beiden Ausführungsformen, die in den Figuren 2 und 3 dargestellt sind, umfasst der Dosenkörper 2 eine gewickelte Innenmateriallage 11 und eine gewickelte Außenmateriallage 12. Bei der zweiten Ausführungsform gemäß der Figur 3 ist eine weitere Materiallage vorhanden, nämlich eine gewickelte Zwischenmateriallage 14, die zwischen der Innenmateriallage 11 und der Außenmateriallage 12 angeordnet ist. Es können auch mehr als nur eine Zwischenmateriallage 14 zwischen der Innenmateriallage 11 und der Außenmateriallage 12 angeordnet sein, wobei es sich gezeigt hat, dass drei Zwischenmateriallagen 14 eine Art Maximum darstellen und eine weitere Erhöhung der Anzahl Zwischenlagen zur Erhöhung der Stabilität nicht notwendig ist.

Die Innenmateriallage 11, die Außenmateriallage 12 und bei der zweiten Ausführungsform die Zwischenmateriallage 14 werden ab Materialbahn-Rollen 15 abgewickelt. Dann werden in einer Maschine ihre Randbereiche geschliffen, sodass sie entweder eine Schrägfläche oder eine Stufe bilden, damit die später überlappenden Randbereiche nicht dicker ausfallen als jene der Kartonverbund-Material-Lage selbst. Hernach werden die Materialbahnen quer zu ihrer Verlaufrichtung und im rechten Winkel zum Dosenkörper 2 um einen Dorn gewickelt, zur Fertigung des Dosenkörpers 2 und der späteren geschlossenen Dose 1. Die dann überlappenden Randbereiche der einzelnen Materiallagen werden durch Verleimung miteinander formschlüssig verbunden. Folglich weist die gewickelte Innenmateriallage 11 eine Innennaht 15 und die Außenmateriallage 12 eine Außennaht 16 auf. Bei der zweiten Ausführungsform weist dementsprechend die Zwischenmateriallage 14 eine Zwischennaht 17 auf.

Für die Funktion und Ästhetik des Fluidbehälters, insbesondere auch einer Getränkedose, ist es wesentlich, dass die einzelnen Nähte 15, 16 und gegebenenfalls 17 nicht auf identischen Umfangspositionen angeordnet sind, wie aus Figur 3 ersichtlich, sondern dass die Innennaht 15, die Außennaht 16 und bei dem zweiten Ausführungsbeispiel zusätzlich die Zwischennaht 17 an unterschiedlichen Umfangspositionen angeordnet sind, nachdem die Materiallagen 11, 12 und gegebenenfalls 14 miteinander verleimt wurden. Ob dabei die Innennaht 15 zu der Außennaht 16 um 180° versetzt angeordnet ist, wie es in Figur 2 gezeigt ist, oder ob die Nähte 15, 16 und 17 um Bloß jeweils ca. 15° zueinander versetzt angeordnet sind, spielt nicht so sehr eine Rolle. Wichtig ist einzig, dass die Nähte 15, 16 und gegebenenfalls 17 relativ versetzt zueinander angeordnet sind und nicht auf der gleichen Umfangsposition des Dosenkörpers 2 liegen.

Als Basismaterial sind die Innenmateriallage 11 und die Außenmateriallage 12 jeweils von einer Kraftpapierschicht 18 gebildet, wobei - wenn vorhanden - auch die Zwischenmateriallage 14 von einer Kraftpapierschicht 18 gebildet ist. Dabei weist eine jeweilige Kraftpapierschicht 18 ein Flächengewicht von wenigstens 40 g/m2 und von höchstens 180 g/m2 auf, wobei ein Flächengewicht von wenigstens 80 g/m2 und von höchstens 120 g/m2 bevorzugt ist. Als alternatives Basismaterial kommt auch ein Sackpapier mit einer hohen Reißfestigkeit in Frage.

Bei beiden Ausführungsformen gemäß den Figuren 2 und 3 ist die Kraftpapierschicht 18 der Außenmateriallage 12 einseitig auf der dem Doseninnenraum 16 3 abgewandten äußeren Seitenfläche mit einer Polyolefin-Schicht 19 als Barriereverbund beschichtet. Dieser zweischichtige Aufbau der Außenmateriallage 12 ist durch die gestrichelte Linie schematisch angedeutet, wobei die Darstellung der Figuren 2 und 3 die realen Schichtdicken nicht wiedergeben. Die Polyolefin-Schicht 19 weist ein Flächengewicht von wenigstens 10 g/m2 und von höchstens 40 g/m2 auf, wobei ein Flächengewicht von 20 g/m2 bevorzugt ist. Darüber hinaus kann die Polyolefin- Schicht 19 mit oder ohne semi-permeable Eigenschaften ausgestattet sein. Als nicht gezeigte Alternative zu der Polyolefin-Schicht 19 kann die Kraftpapierschicht 18 der Außenmateriallage 12 einseitig auf der dem Doseninnenraum 3 abgewandten äußeren Seitenfläche wasserfest bedruckbar oder lackierbar ausgebildet sein.

Ferner ist bei beiden Ausführungsformen gemäß den Figuren 2 und 3 die Innenmateriallage 11 einseitig auf der dem Doseninnenraum 3 zugewandten Seitenfläche mit einem gas- und aromadichten Barriereverbund 20 beschichtet. Auch hier ist der zweischichtige Aufbau schematisch durch die gestrichelte Linie in den jeweiligen Figuren angedeutet. Der Barriereverbund 20 selbst ist wiederum mehrschichtig ausgebildet und umfasst eine Polyolefin-Schicht und wenigstens eine Schicht eines Haftvermittlers. Zusätzlich kann der Barriereverbund 20 dann noch eine Schicht aus Aluminium, aus Ethylen-Vinylalkohol-Copolymer oder aus Polyvinylalkohol aufweisen. Bei einer zusätzlichen Schicht aus Aluminium weist der Barriereverbund 20 ein Flächengesamtgewicht von wenigstens 60 g/m2 und von höchstens 130 g/m2 auf, vorzugsweise von 110 g/m2. Bei einer zusätzlichen Schicht von Ethylen-Vinylalkohol- Copolymer oder von Polyvinylalkohol anstelle von Aluminium weist der Barriereverbund 20 ein Flächengesamtgewicht von wenigstens 50 g/m2 und von höchstens 100 g/m2 auf, vorzugsweise von 70 g/m2.

Unter Berücksichtigung des vorstehenden Schichtaufbaus ist ersichtlich, dass bei der ersten Ausführungsform gemäß der Figur 2 die gewickelte Innenmateriallage 11 und die gewickelte Außenmateriallage 12 vollflächig an den sich gegenüberliegenden Seitenflächen der jeweiligen Kraftpapierlagen 18 miteinander verleimt sind. Bei der zweiten Ausführungsform gemäß der Figur 3 sind die Innenmateriallage 11, die Zwischenmateriallage 14 und die Außenmateriallage 12 an den sich gegenüberliegenden Kraftpapierschichten 18 vollflächig miteinander verleimt.

Zusammenfassend ist dieser am Beispiel einer Getränkedose beschriebene Fluidbehälter vornehmlich aus Kartonmaterial hergestellt und ist sowohl für nichtkohlensäurehaltige wie auch für kohlensäurehaltige Getränke geeignet. Es handelt sich dabei um einen vorzugsweise dreiteiligen, linear gefertigten, in erster Linie - für eine gleichmäßige Druckaufnahme - zylindrischen Fluidbehälter, wobei auch andere Formen theoretisch möglich sind, wie zum Beispiel die Form eines 5 Liter Bierfasses. Der Fluidbehälter umfasst in jedem Fall einen Dosenkörper 2 aus einem mehrlagigen Karton- und Barrierekartonverbund sowie einen Gefäßboden 4 aus Metall, vorzugsweise aus Aluminium, und einen Gefäßdeckel 5 aus Metall, vorzugsweise ebenfalls aus Aluminium. Der Fluidbehälter kann durch eine Lackierung für den Einsatz im Getränkebereich ausgerüstet sein. Der Gefäßdeckel 5 ist ferner mit einer bekannten Vorrichtung für das Öffnen, vorzugsweise einem Pull-Ring versehen, wobei gegebenenfalls auch Mittel vorgesehen sein können, die ein Wiederverschließen erlauben.

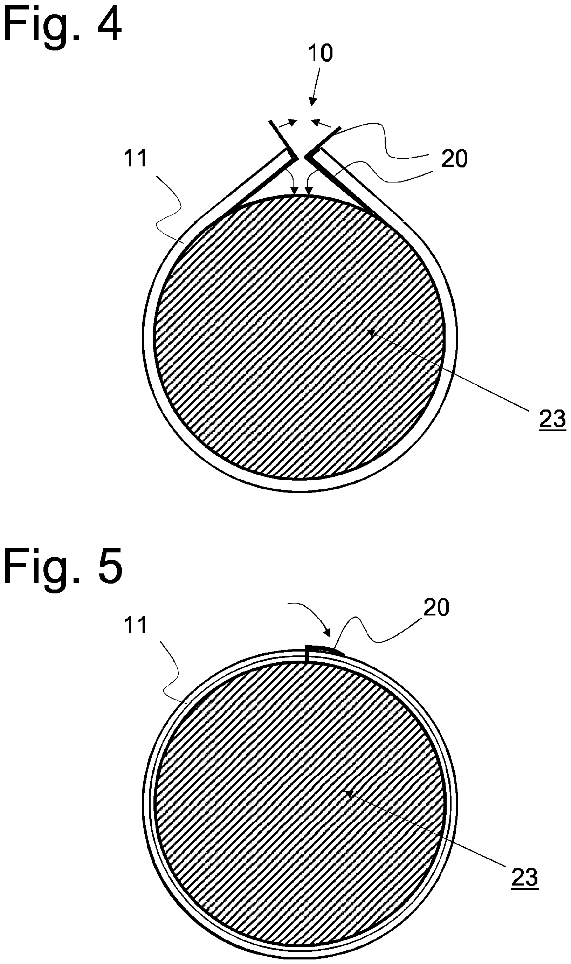

Nach dem besonderen Verfahren zur bedarfsweisen, zeitgerechten Herstellung eines solchen Fluidbehälters, der auch als Getränkedose geeignet ist, wird der Fluidbehälter als großer Vorteil gegenüber einer Aludose direkt am Ort der Befüllung hergestellt, und zwar immer gerade dann, wenn man Gebinde benötigt, und dies in der gewünschten Größe der Dosen, und in der gewünschten Menge - nicht mehr als man in einer Füllsequenz des Betriebs gerade braucht. Das Herstellungsverfahren und die damit erzielte Herstell-Geschwindigkeit der Dosen kann kompatibel bzw. synchron mit der Abfüllgeschwindigkeit einer Abfüllstation gestaltet werden. Eine Lagerhaltung von leeren Dosen entfällt somit komplett, wie auch der Raumbedarf und die Kosten und die Umtriebe mit dem dafür nötigen Warenumschlag, der damit verbunden ist. Dieser Herstellungsprozess wird nachfolgend anhand der Figuren 4 bis 23 näher beschrieben.

Die Figur 4 zeigt zunächst, wie die innerste Lage 11 von Kartonverbund-Material um einen Stahldorn 23 gewickelt und verbunden wird. Sie ist auf ihrer bei der Wicklung innen zu liegenden kommenden Seite, die später mit der Füllung in Berührung kommt, mit einer Barriereschicht aus zum Beispiel Polyolefin oder Polyethylen PE als Barriereverbund 20 ausgerüstet. Auf diesen Barriereverbund in Richtung nach außen kommt zum Beispiel eine Aluminium-Folie als Sauerstoff- und Aromabarriere, und dann eine Kraftpapierschicht von ca. 35 bis -50 Gramm/m2. Dieses Laminat bildet die erste 18 Lage 11. Die Polyolefin- oder Polyethlenschicht 20 ist an den in Wickelrichtung liegenden Rändern das sonstige Laminat leicht überlappend ausgeführt und die Überlappungen sind nach oben gefaltet, wie in der Figur 4 ersichtlich. Beim satten Umwickeln, wenn die beiden Randbereiche auf Stoß auf den Dorn gedrückt werden, wie mit den Pfeilen in Figur 4 angedeutet, treffen diese beiden Überlappungen schließlich im Nahtbereich 10 aufeinander und schmiegen sich aneinander an. Bei diesem Schließen der Umwicklung wie mit den Pfeilen in Figur 4 gezeigt wird der Zustand wie in Figur 5 gezeigt erreicht, indem die beiden Ränder mit ihren Stirnseiten genau aneinander stoßen, also einen sauberen Stoß bilden. Die aus dem Stoß nach außen ragenden beiden Überlappungen der Barriereschichten 20 können durch Erhitzung mittels Induktion oder Ultraschall dichtend verschweißt werden, womit diese innerste Lage 11 aus Kartonverbundmaterial einen dichten Hohlzylinder bildet. Die verschweißten Räder der Barriereschicht 20 werden auf die Außenseite der Wicklung umgelegt, wie mit dem nach unten zeigenden Pfeil gezeigt, und mit der Außenseite verschweißt, wie in Figur 5 ersichtlich. Diese "Auffalt- und Umklapp-Versiegelung" stellt eine absolut gasdichte Abkapselung des Inneren dieses Hohlzylinders gegen außen sicher. Wird in einer Variante anstelle einer Alufolie eine Folie aus einem Ethylen- Vinylalkohol-Copolymer EVOH als Sauerstoffbarriere eingesetzt, so kann diese Folie nicht mittels Induktion verschweißt werden, sondern in diesem Fall kommt eine Ultraschall-Schweißung zum Einsatz.

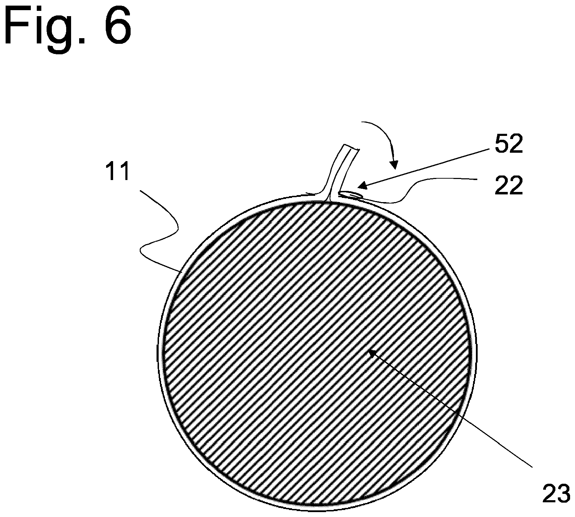

In einer Alternative kann diese innerste Wicklung, das heißt die als Barrierebahn wirkende innerste Lage 11, wiederum um einen Dorn 23 geformt werden, wie in Figur 6 dargestellt. Hierbei werden die den Wicklungsumfang überragenden Randbereiche der Lage nach außen umgelegt, sodass jeweils die inneren Barriereschichten aus PE aneinander anliegen. Dann werden diese Barriereschichten der beiden Randbereiche miteinander verschweißt, mittels einer Induktions- oder Ultraschall-Schweißung. Hernach werden die beiden zusammengeschweißten Randbereiche gemeinsam auf eine Seite auf die Lage abgeschwenkt. Der im Bild auf der rechten Seite ankommende Randbereich wird also um 180° umgelegt. Dabei trifft seine Kraftpapieroberfläche auf die Kraftpapieroberfläche der gewickelten Lage und der beim Abschwenken gebildete Kanal oder Kännel 52 wird mit Leim 22 ausgerüstet, sodass die beiden zusammengeschweißten Randbereiche mit der aufgewickelten Lage satt verleimt und somit versiegelt werden. Die Bahn weist für diese Verleimung daher kein Stoß-an-Stoß 19 Maß auf, sondern es wird bewusst eine dreilagige Überlappung von etwa 8mm Breite erzeugt. Weil der Kännel 52 mit Leim 22 verfüllt ist, wird ein Transport von Flüssigkeit im Zuge des späteren Füllprozesses wirksam vermieden. Das andere, offene Bahnende bzw. der gegenüberliegende, hier im Bild linke Randbereich kommt in keinen Kontakt mit dem späteren Inhalt und ist selbst durch die anschließend aufzubringende Wickellage geschützt.

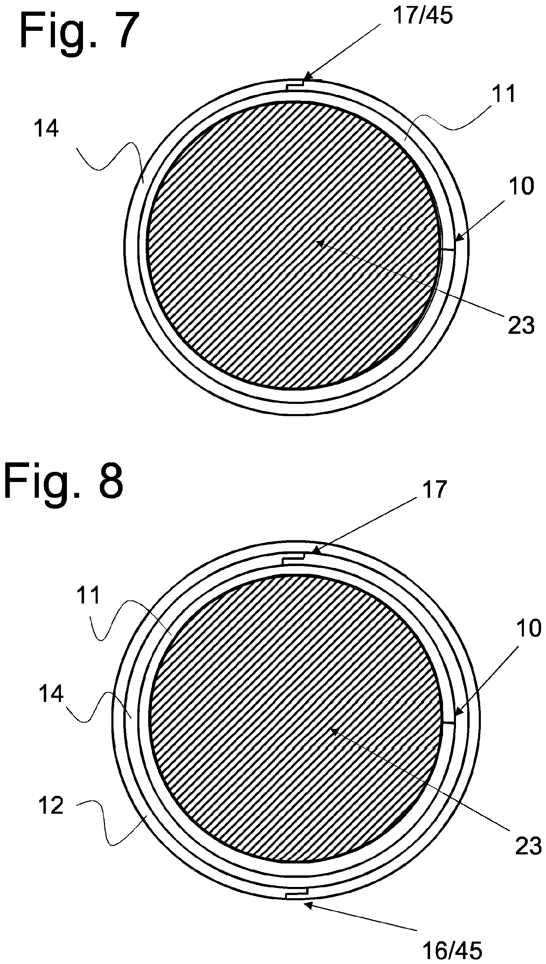

Eine nächste Lage 14 von Kartonverbund-Material wird zeitgleich, jedoch örtlich ganz wenig versetzt wie in Figur 7 gezeigt um den Dorn 23 und die bereits vorhandene Lage 11, die hier nach der Version gemäß Figur 5 verbunden wurde, aufgewickelt und mit ihr durch Verleimung verbunden. Die Randbereiche der zweiten Lage 14 sind stufenförmig geschliffen, sodass sie sich durch Überlappung 45 formschlüssig miteinander verbinden lassen und diese Überlappung 45 wird verleimt, zur Bildung einer mittleren Naht 17. In Figur 8 ist gezeigt, dass eine dritte Lage 12 aus Kartonverbund- Material, das heißt die äußere Lage, ebenfalls zeitglich und örtlich ganz wenig versetzt um die dann mittlere Lage 14 gewickelt wird und ihre formschlüssige Überlappung 45 ebenfalls verleimt wird, zur Bildung der äußeren Naht 16. Die äußerste Schicht kann mit einem Außenmaterial beschichtet sein, zum Beispiel mit einer Schicht mit ganz feinen Löchern, sodass Wasserdampf aus dem Dosenkörper austreten kann, während aber umgekehrt kein Eindringen von Wasserdampf in die Dose ermöglicht ist. Bei dieser Beschichtung handelt es sich um Polyethylen PE, Polypropylen PP oder Polyethylenterephtalat PET. Die äußerste Naht 16 wird mit einem Dichtstreifen aus PE, PP, PET mit/ohne Haftvermittler oder Klebstoff versiegelt und dieser Dichtstreifen wird je nach seiner Ausprägung mit oder ohne Wärmezufuhr appliziert. Anstelle des Aufklebens eines Streifens 46 auf das sich auf dem Dorn 23 bewegende entstandene Endlosrohr 27 kann die Naht 16 der äußersten Lage mittels heißem und somit flüssigem PE versiegelt werden.

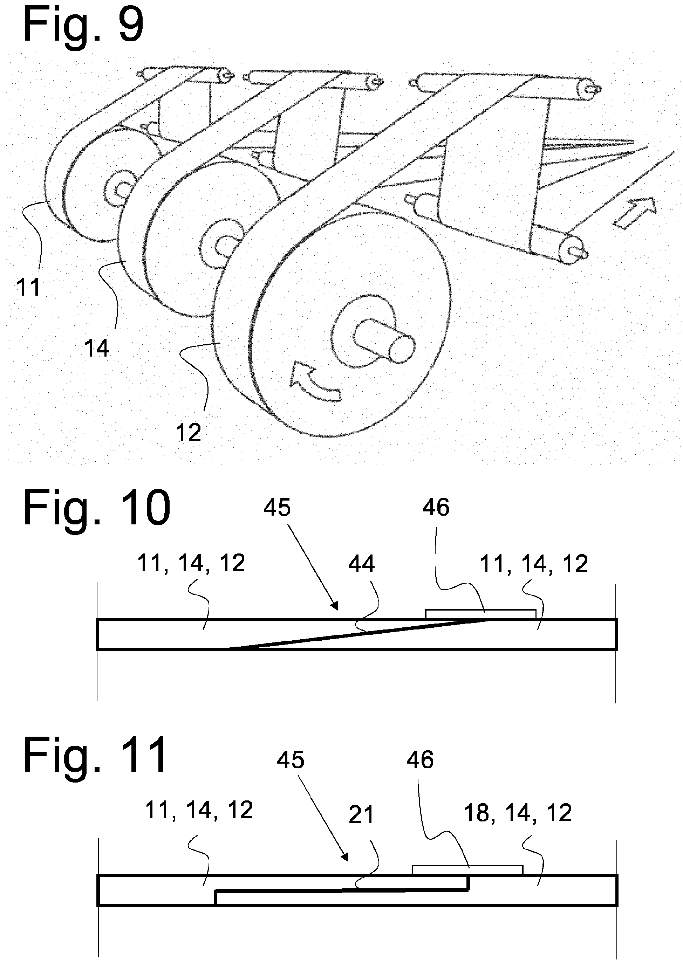

Für die industrielle Herstellung der Dosen aus Kartonverbund-Material wird dieses in Form von vorgefertigten Bahnen aus Kraftpapier mit seiner jeweiligen Beschichtung in Rollen angeliefert und dann wie in Figur 9 gezeigt bezogen. Es sind drei Rollen als Bahnen für die drei zu wickelnden Lagen 11, 14 und 12 vorhanden. Nach dem Abrollen werden von einer Maschine die Randbereiche der Bahnen geschliffen, zum Erzeugen einer Schrägfläche 44 oder einer Stufe 21. Es sind denn auch 20 hauptsächlich diese Rollen, nebst dem Leim und den Boden- und Deckelelementen, die für die Herstellung der Fluidbehälter an den Dosenabfüller geliefert werden, aber ausdrücklich kein Leergut und somit kein Volumengut mehr.

In Figur 10 ist eine mittels einer Maschine geschliffene Schrägfläche 44 in einem Querschnitt durch die verbundenen Lagen 11, 14 oder 12 gezeigt. Damit werden Unterschiede in der Materialstärke des Dosenkörpers vermieden, und die Nahtstellen der Karton- bzw. Kraftpapierbahnen, deren Längsrand-Bereiche durch eine Wicklung zur Überlappung gebracht werden sollen, werden nicht dicker als die Materialbahn selbst. Oder es wird von einer Maschine in die durchlaufende Bahn eine Stufe 21 in deren Randbereiche geschliffen oder geschnitten, wie in Figur 11 gezeigt. Dieses Abschleifen oder Zuschneiden der Längsränder einer Materialbahn bewirkt, dass beim Überlappen der beiden Längsränder durch Rollen in Querrichtung dieselben formschlüssig aufeinanderliegen und der Überlappungsbereich 45 nicht dicker als das Kartonverbund-Material selbst ausfällt. Als Alternative zu dieser überlappenden Außen-/Etikettenbahn wurde auch eine Stoß-an-Stoßfertigung getestet, mit sehr guten Ergebnissen. Dies bedeutet, dass diese Bahn nach der Abrollung nicht in eine Stufe geschliffen sein muss, sondern bloß auf ihre nötige Breite geschnitten werden kann.

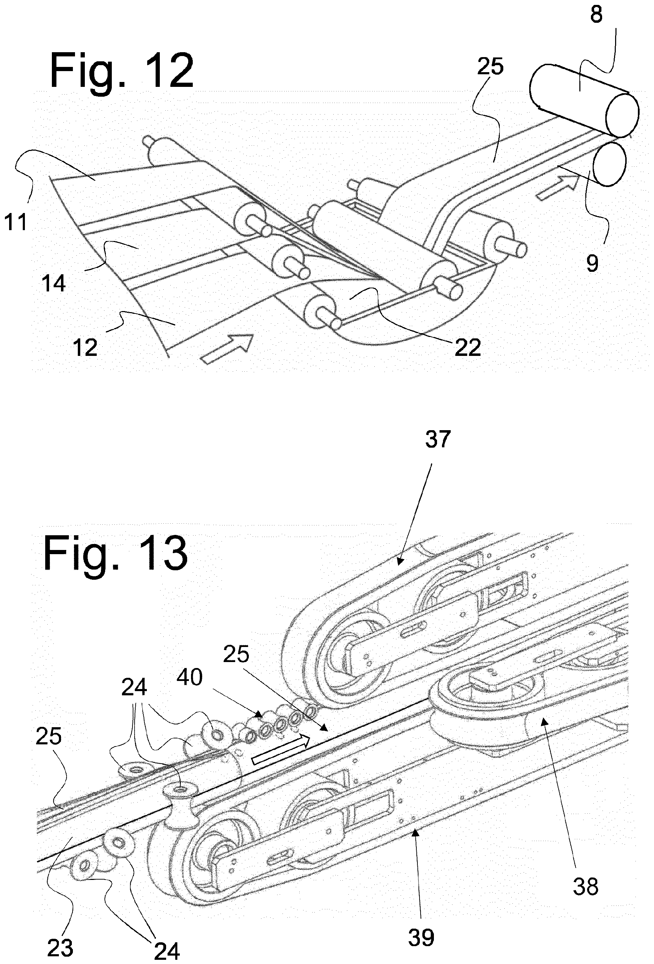

In einem nächsten Verfahrensschritt werden die Bahnen auf beiden flächigen Seiten mit einem Leim beschichtet. Das kann so wie in Figur 12 gezeigt erfolgen, indem die Bahnen 11, 14, 12 durch ein Bad mit Leim 22 gezogen werden. Hernach werden die Bahnen durch zwei aufeinander ablaufende Presswalzen 8, 9 geführt, oder durch mehrere solche Presswalzen-Paare, oder zwischen zwei Förderbändern, um sie satt miteinander zu verleimen. Effektiv mit Leim 22 beschichtet wird die Innenseite und die Außenseite der mittleren Lage, sowie die Innenseite der äußersten Lage.

Im nächsten Verfahrensschritt, wie in Figur 13 gezeigt, wird Kartonverbund- Material als "endlose" Materialbahn 25 mit Barriereverbundmaterial, das heißt zunächst jenes zur Bildung der innersten Lage 11, durch Zuführen und Entlangziehen längs eines stationären, zylinderförmigen Stahldoms 23 in einer Maschinenstation durch dieselbe um den Stahldorn 23 gewickelt. Das Kartonverbund-Material läuft dabei zwischen dem Stahldorn 23 und mehreren anschmiegenden Rollen 24 mit je U-förmigem Querschnitt hindurch. Die Rollen 24 rollen dabei passgenau auf einem Umfangsbereich des 21 Stahldoms 23 ab, sodass die Randbereiche der Materialbahn schließlich formschlüssig auf Stoß aneinander anschließen. Dann folgt die Verschweißung der nach außen ragenden Barriereschicht-Ränder, wie den Figuren 4 und 5 gezeigt. Dann folgt das Weiterbefördern des nun zu einem Rohr gewickelten Kartonverbund-Materials 25 der innersten Lage 11 über einen weiteren Abschnitt des Stahldoms 23. Anpressrollen 24 halten das Kartonverbund-Material 25 satt auf dem Dorn 23 und oben wird die mittels Induktion oder Ultraschall eben erzeugte Schweißnaht mittels einer Reihe von Rollen 40 umgelegt und angepresst, sodass sie mit der Außenseite des Kartonverbund- Materials 25 verschweißt wird. Die dann fertige innerste Lage 11 aus Kartonverbund- Material 25 wird mit mehreren Fördereinrichtungen auf dem Dorn 23 weiterbefördert. Im gezeigten Beispiel sind das drei Fördereinrichtungen 37-39 mit je einem Förderband, wobei diese Förderbänder über mehrere Rollen laufen und um den Umfang verteilt auf die zu befördernde Materialbahn 25 angepresst werden und diese Materiallage auf dem Dorn 23 vorwärts verschieben, in der mit dem Pfeil eingezeichneten Richtung.

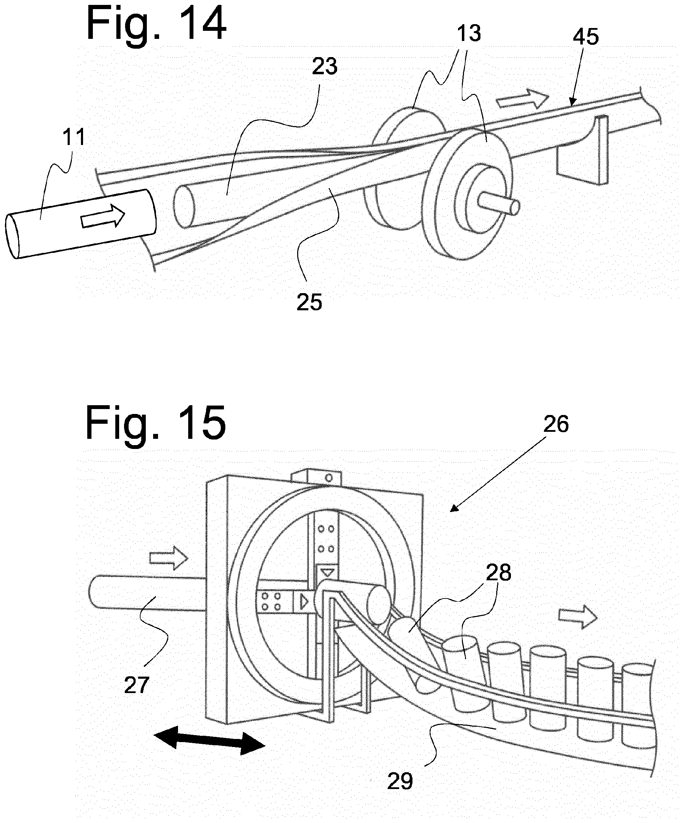

Als Nächstes wird auf derselben Maschine wie in Figur 13 gezeigt örtlich kurz hinter der ersten Lage die mittlere Lage von Kartonverbund-Material 25 zeitgleich auf die innerste Umwicklung bzw. Lage 11 aufgebracht. Das Zuführen und Umwickeln des Dorns 23 mit einer Kartonverbundmaterial-Lage 25 ist in den Figur 13 und 14 gezeigt. Die in eine Stufe oder Schrägfläche geschnittenen Längsränder dieser mittleren Lage werden durch die Umwicklung des Dorns 23 zur Überlappung gebracht und mittels des bereits zuvor aufgebrachten Leims verleimt. Die Rollen 24 an der Maschinen nach Figur 13 dienen für alle Wickellagen zur satten Anpressung rund um den Umfang, und die Rollen 40 in Figur 13 speziell im Nahtbereich. Und schließlich wird die äußere Lage ebenfalls zeitglich und örtlich wenig zurückversetzt auf die zuvor aufgewickelte Lage aufgebracht. Wenn die mittlere und die äußere Lage bereits verleimt eintreffen, so können sie nach dem Erzeugen der ersten inneren Lage 11 in einem Schritt gleichzeitig und an der gleichen Stelle gemeinsam an den Stahldorn 23 bzw. die innere gewickelte Lage 11 herangeführt und von der Maschinenstation um diese innerste Lage 11 gewickelt werden. Die innerste, fertig verschweißte Lage 11 trifft dann von links wie in Figur 14 angedeutet auf den Stahldorn 23 und die Bahnen 14 und 12 werden dem Stahldorn 23 entlanggeführt und in der Maschine gemäß Figur 13 mittels der Anpressrollen 24 um den Stahldorn 23 bzw. die bereits erzeugten Wickellagen gewickelt, wobei die jeweiligen Randbereiche zur Überlappung gebracht und verleimt 22 werden, und wonach die Verleimung mit den Anpressrollen 40 gefestigt wird. Dieses gleichzeitige und gemeinsame Aufwickeln der mittleren und äußeren Lage von Kartonverbund-Material bzw. Kraftpapier wird bevorzugt praktiziert, weil es noch rationeller vonstattengeht als ein gesondertes Aufbringen.

Das jetzt aus drei miteinander verleimten Lagen hergestellte und in Figur 15 gezeigte Rohr 27 aus Kartonverbund-Material wird dann in einer getaktet hin und her fahrbaren Guillotine 26 zugeführt, wie in Figur 15 gezeigt, welche beim sequentiellen gleichförmigen Mitfahren mit dem Rohr 27 an gewünschten Stellen dieses Rohr 27 in Rohrabschnitte 28 schneidet. Das Schneiden kann aber nicht nur mit einer solchen fahrbaren Guillotine erfolgen, sondern auch mit einer bekannten Multi- Rundmessermaschine. Hierbei fährt ein Schlitten mit mehreren Rundmessern in der Produktionsgeschwindigkeit mit dem Endlosrohr 27 mit und kann so in einem Vorgang mehrere Rohrabschnitte 28 schneiden, beispielsweise für eine Getränkedose von 135mm Höhe: Die Schlittenlänge beträgt dann 1700 mm und es können gleichzeitig jeweils 12 Rohrabschnitte 28 für 12 Dosen geschnitten werden. Nach dem Schneiden fahren die Dosen-Abschnitte 28 durch einen Wärmetunnel, um die Leimfeuchtigkeit abzuführen. Die Wärme kann durch verschiedene Arten erzeugt werden. Bevorzugt wird Warmluft.

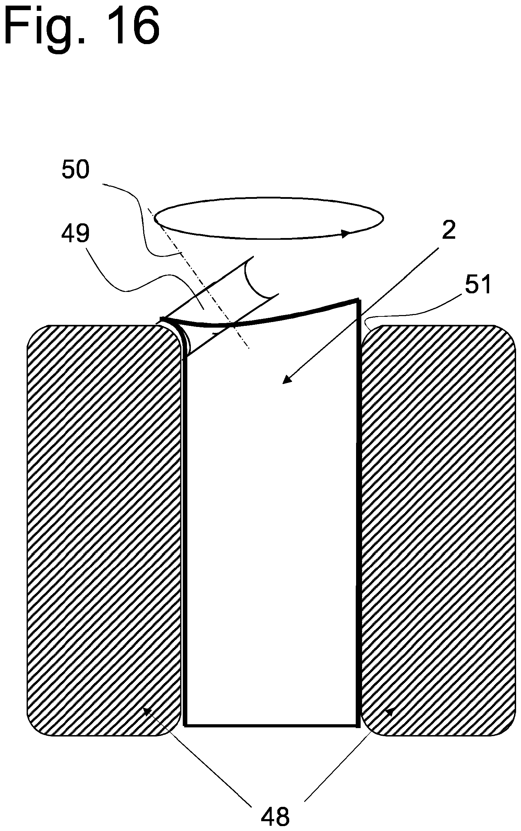

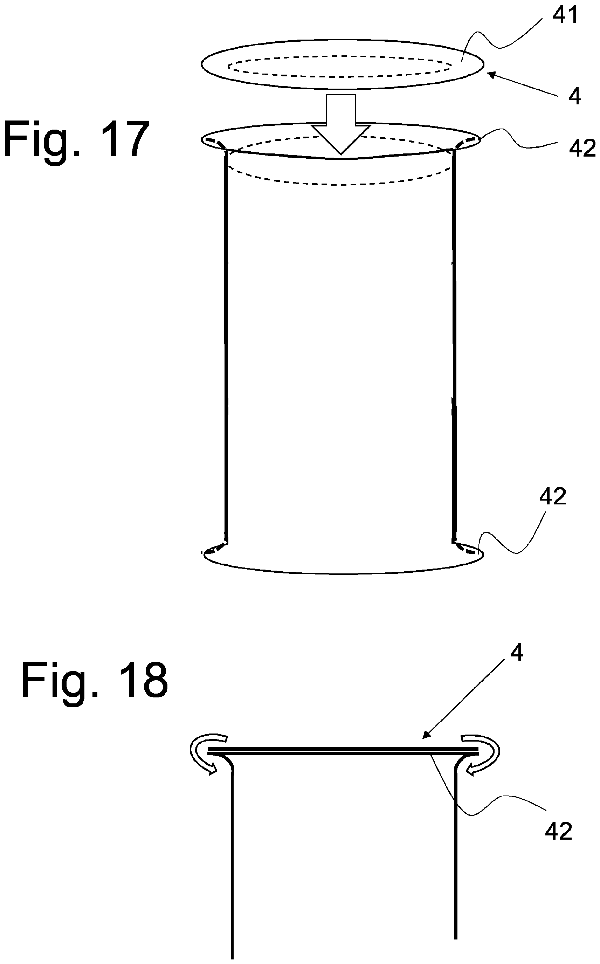

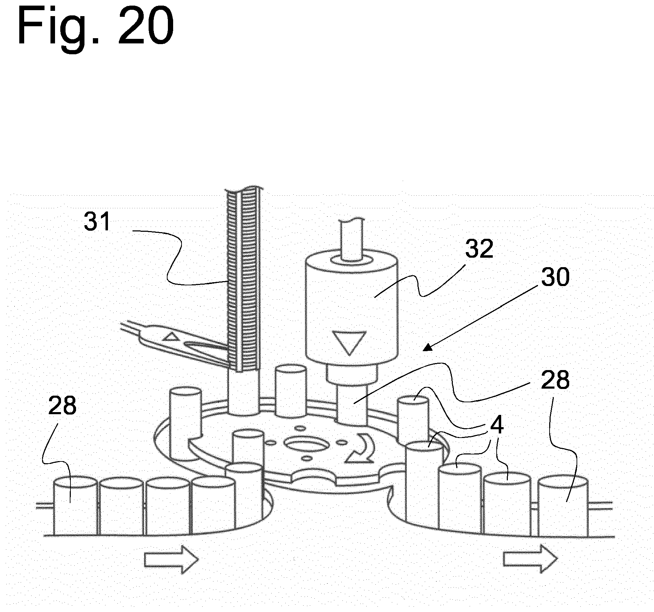

Nach dem Zuschneiden der Rohrabschnitte 28 in der gewünschten Länge, je nach gewünschtem Dosenvolumen, werden durch eine Maschine an den beiden Rändern der offenen Enden der Rohrabschnitten 28 diese Ränder in Auskragungen ausgeformt. Hierzu werden von beiden Seiten rotierende Spreizwerkzeuge in die offenen Enden eingefahren. Die Figur 16 zeigt eine Möglichkeit für dieses Aufspreizen auf. Der Dosenkörper 2 wird in einen Hohlzylinder 48 gesteckt, welcher abgerundete Innenränder 51 aufweist. Eine Stahlrolle 49, die um die Achse 50 dreht, wird diesem gekrümmten Innenrand 51 nachgefahren, wobei die Achse 50 so bewegt wird, dass sie eine Kegelwand beschreibt. Die Stahlrolle 49 rollt den oberen Randbereich des Dosenkörpers 2 in einem oder mehreren Umgängen auf den gekrümmten Rand 51 und spreizt die Lagen leicht auf. Es entsteht eine Auskragung, wie in der folgenden Figur 17 gezeigt. Die Schnittränder werden nach dieser Krempelung bzw. dem erfolgten Aufspreizen durch Anstreichen mit einem Dispersionskleber, zum Beispiel einem flüssigem Polyethylen PE oder einem Dispersionskleber oder einem anderen 23 geeigneten, schnell abbindenden und lebensmittelkonformen Kleber versiegelt, damit keine Feuchtigkeit ins Innere der Kraftpapierschicht eindringen kann, denn das spätere Befüllen erfolgt unvermeidbar in einer feuchten Atmosphäre. Die Schnittkanten werden hernach wiederum mit Wärme behandelt, um die Abbindezeit zu minimieren. Hierfür wird an dieser Stelle eine Infrarot-Bestrahlung bevorzugt. Danach werden diese Rohrabschnitte 28 in aufrechter Lage in einer Reihe in einem Förderkanal 29 eingeordnet und durchfahren dann wie in Figur 20 gezeigt ein Karussell 30, an welchem ein Automat 32 aus einem Zuführmagazin 31 ein vereinzeltes Bodenelement 4 in die oben offene Seite jedes Rohrabschnitts 28 einsetzt und den äußeren Randbereich des radial auslaufenden Bodenrandes in radialer Richtung um den Randbereich des offenen Rohrabschnittes 28 dichtend umbördelt.

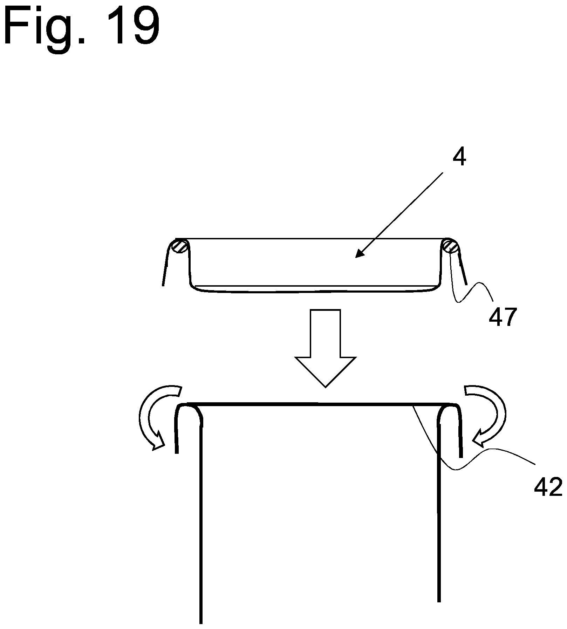

In den Figuren 17 und 18 ist dieser Vorgang des dichten Einbördelns des Boden- 4 oder auch Deckelelementes 5 genauer gezeigt. Beim Boden- und Deckelelement kann es sich um einen Standard-Boden bzw. Standard-Deckel handeln, mit dem herkömmliche Aludosen verschlossen werden, und der dann mit denselben Maschinen montierbar ist. Das Boden- 4 oder Deckelelement 5 besteht aus Aluminium und weist einen radial abstehenden Randbereich 41 auf, einen Bereich also, der über den Durchmesser des Dosenkörpers 2 hinausragt. Das Boden- 4 oder Deckelelement 5 mit diesem Randbereich 42 wird von einem Automaten zur Überlappung gebracht, wie in Figur 17 mit dem nach unten gerichteten Pfeil angedeutet. Hernach erfolgt die Einbördelung durch den Automaten 32, welcher hierzu die auskragenden doppellagigen Abschnitte 41, 42 gemeinsam mit dem Randbereich des Dosenkörpers wie mit den in Figur 18 gezeigten Pfeilen einbördelt, also um etwa 360° oder mehr einrollt, wodurch eine dichte Bördelnaht entsteht. Die Figur 19 zeigt einen alternativen Boden bzw. Deckel 4, der hier in einem diametrischen Schnitt dargestellt ist. Wie man erkennt, ist in den von ihm gebildeten nach unten offenen Kännel ein Dichtring 47 auf Silikonbasis eingelegt. Der Deckel wird hernach wie bei einer herkömmlichen Alu-Dose eingebaut, mit denselben Maschinen. Der Silikondichtring sorgt für eine zusätzliche einwandfreie Dichtigkeit, und die einander überlappenden Bereiche werden gemeinsam nach innen eingerollt.

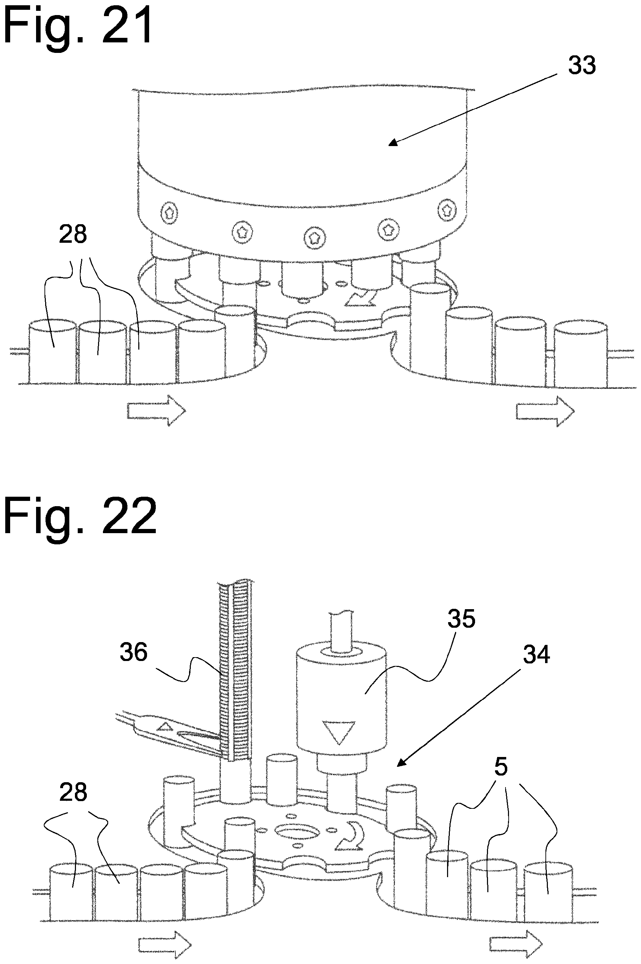

Die Figur 20 zeigt einen Rundtaktautomaten 32 mit einem Karussell 30, welcher die Bodenelemente auf die Dosenkörper montiert und deren Ränder mit dem 24 Dosenkörperrand einkrempelt bzw. einbördelt, wie oben beschrieben. Es folgt nun das Stürzen der einseitig offenen Rohrabschnitte 28 im Förderkanal, sodass deren nun offene Seite oben liegt, wie in Figur 21 gezeigt. Dann durchfahren sie eine Karussell-Füllstation 33, welche jeden Rohrabschnitt 28 mit definierter Füllmenge befüllt. Schließlich durchfahren die gefüllten, unten verschlossenen Rohrabschnitte 28 wie in Figur 22 gezeigt ein Karussell 34, an welchem ein Automat 35 aus einem Zuführmagazin 36 ein vereinzeltes Deckelelement 5 mit Pullring-Verschluss in die oben offene Seite jedes gefüllten Rohrabschnitts 28 einsetzt und dazu den wiederum radial abstehenden Rand des Deckelelementes 5 in radialer Richtung um den Randbereich des offenen Rohrabschnitts 28 dichtend umbördelt.

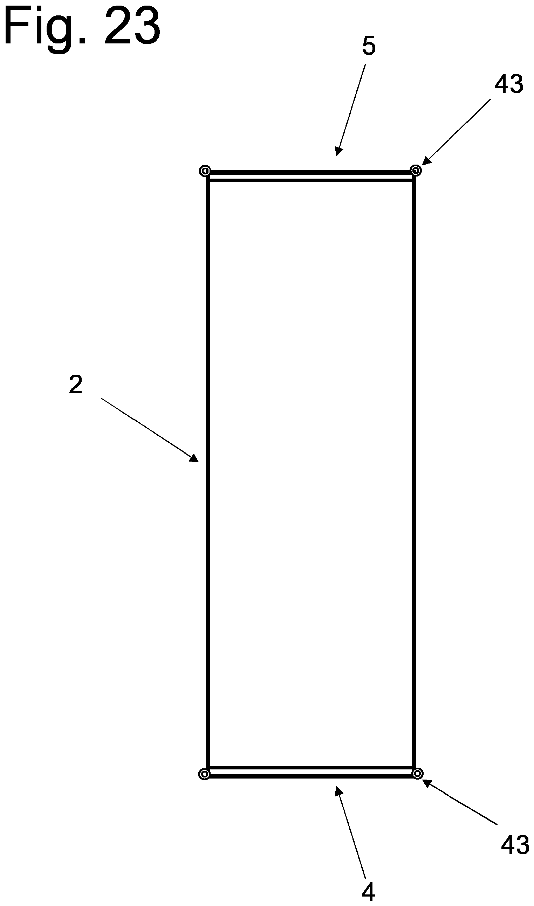

Eine gefüllte und geschlossene Dose 1 präsentiert sich hernach wie in Figur 23 dargestellt, wo sie in einem Schnitt längs ihrer Längsachse gezeigt ist. Man erkennt den Dosenkörper 2 und die Bördelungen 43 oben und unten, mit denen der Deckel 5 und der Boden 4 dichtend eingesetzt wurden.

Die Gefäßhöhe eines solchen Getränkebehältnisses 1 ist beliebig und kann beispielsweise 100 mm betragen, wobei eine Höhe von 100 mm bis 250 mm bevorzugt ist. Der Gefäßdurchmesser kann hierbei von 35 mm bis zu 600 mm betragen, wobei ein Durchmesser von 45 mm bis 70 mm bevorzugt ist.

### Ziffernverzeichnis

1 Dose
2 Dosenkörper
3 Doseninneres
4 Bodenelement
5 Deckelelement
6 Unterer Rand Dosenkörper
7 Oberer Rand Dosenkörper
8 Presswalze oben
9 Presswalze unten
10 Nahtbereich
11 Innere Materiallage
12 Äussere Materiallage
13 Doppelanpressrolle
14 Mittlere Materiallage
15 Innere Naht
16 Äussere Naht
17 Mittlere Naht
18 Kraftpapierschicht
19 Barriereverbund/Polyolefinschicht
20 Barriereverbund
21 Stufe
22 Leim
23 Stahldorn
24 Anpressrollen
25 Materialbahn
26 Guillotine
27 Gewickeltes Rohr am Stück
28 Rohrabschnitt
29 Förderkanal
30 Karussell für Bodeneinbau
31 Zufuhrmagazin für Boden
32 Automat für Bodeneinbördelung
33 Karussell-Füllstation
34 Karussell für Deckeleinbau
35 Automat für Deckeleinbördelung
36 Zufuhrmagazin für Deckel
37 Fördereinrichtung für Dosenmaterial 25 oben
38 Fördereinrichtung für Dosenmaterial 25 seitlich
39 Fördereinrichtung für Dosenmaterial 25 unten
40 Rollen für das Anpressen der Schweissnaht
41 Deckelrand
42 Auskragender Rand des Dosenkörpers
43 Gebördelter Rand
44 Schrägfläche
45 Überlappung
46 Streifen auf überlappende Naht am Dosenkörper
47 Dichtring auf Silikonbasis
48 Stahl-Hohlzylinder zum Fertigen der Auskragung
49 Stahl-Rolle
50 Achse der Stahlrolle
51 Gekrümmter Innenrand des Stahl-Hohlzylinders
52 Kanal an der Nahtstelle

## Patentansprüche

1. Fluidbehälter, bestehend aus mindestens zwei Lagen (11, 12) von zu einem Hohlzylinder als Dosenkörper (2) in einer Richtung senkrecht zu seiner Achse gewickeltem Kartonverbund-Material aus Kraftpapier (18), wobei die Verbindungsnähte (15, 16) der mindestens zwei Lagen (11, 12) von Kartonverbund-Material in Bezug auf den Umfang der Wicklungen an versetzten Stellen liegen, und eine Seite (6) des so gebildeten offenen Hohlzylinders mit einem Bodenelement (4) verschlossen ist, und die andere offene Seite (7) des Hohlzylinders bzw. Dosenkörpers nach Befüllung mit einem Deckel (5) mit Verschluss in gleicher Weise verschliessbar ist bzw. verschlossen ist, **dadurch gekennzeichnet, dass** dessen Ränder sich für die innerste Lage in Wickelrichtung entweder auf Stoss treffen, während die innerste Schicht der innersten Lage, nämlich die Barriereschicht, das Kraftpapier (18) an seinen Rändern in Wickelrichtung überlappt, oder aber die Randbereiche der innersten Lage in Wickelrichtung insgesamt überlappen, wobei in beiden Fällen die Überlappungen nach rechtwinkliger Abwinkelung von der gewickelten Lage (11) weg mit ihren Barriereschichten aneinander anliegen und miteinander verschweisst sind und dann auf eine Seite auf die Lage umgelegt und mit ihr verleimt sind, während bei jeder weiteren Lage (14, 12) deren Randbereiche in Wickelrichtung überlappen, wobei die überlappenden Bereiche (45) über ihre Dicke schiefwinklig in eine Schrägfläche (44) oder eine Stufe (21) bildend zugeschnitten oder zugeschliffen sind, sodass die überlappenden Bereiche formschlüssig aufeinander liegen und die überlappenden Bereiche (45) nicht dicker ausfallen als die Dicke des Kartonverbund-Materials selbst.

2. Fluidbehälter (1) nach Anspruch 1, **dadurch gekennzeichnet, dass** die gewickelte innerste Lage (11) eine Innennaht (15) aufweist und von einer Kraftpapierschicht (18) gebildet ist, welche einseitig auf der dem Doseninnenraum (3) zugewandten Seitenfläche mit einem gas- und aromadichten Barriereverbund (20) beschichtet ist, wobei diese Barriereschicht aus Polypropylen PP, Polyethylen PE oder aus einer Alufolie und die Ränder der Kraftpapierschicht (18) in Wickelrichtung überlappt und nach einer Abwinkelung am Stoss dichtend mit der anliegenden Abwinkelung der Barriereschicht des benachbarten Stosses verschweisst ist und dann auf die Aussenseite der gewickelten Lage umgelegt ist, und die gewickelte Außenmateriallage (12) von einer Kraftpapierschicht (18) gebildet ist und ihre Außennaht (16) mit einem Dichtungsstreifen (46) versiegelt ist, welcher längs dieser Aussennahme (16) verläuft.

3. Fluidbehälter (1) nach einem der vorangehenden Ansprüche, **dadurch gekennzeichnet, dass** das Bodenelement (5) einen Aussenrand aufweist, der dichtend um einen zunächst radial auskragenden Rand der aufeinanderliegenden Lagen des Hohlzylinders bzw. Dosenkörpers (2) gekrempelt ist, sodass eine dichte, im Querschnitt runde Umkrempelung (43) längs des axialen Randes des Hohlzylinders bzw. Dosenkörpers (2) gebildet ist, und dass die andere offene Seite (7) des Hohlzylinders bzw. Dosenkörpers (2) nach Befüllung mit einem Deckelelement (6) mit Verschluss in gleicher Weise verschliessbar ist bzw. verschlossen ist.

4. Fluidbehälter (1) nach einem der vorangehenden Ansprüche, **dadurch gekennzeichnet, dass** die Nähte (17, 16) jeder Material-Lage (14, 12) ausser der innersten Lage (11) einen über die Dicke der Lage stufenförmig verlaufenden Überlappungsbereich (10) aufweisen, welcher sich über die gesamte Höhe des Fluidbehälters (1) erstreckt und diese Nähte (17, 16) eine Breite von 1mm bis 6mm, vorzugsweise von 3mm aufweisen, und dass alle Lagen (11, 14, 12) vollflächig miteinander verleimt sind.

5. Fluidbehälter (1) nach einem der vorangehenden Ansprüche, **dadurch gekennzeichnet, dass** die Nähte (17, 16) jeder Material-Lage (14, 12) ausser der innersten Lage (11) einen über die Dicke der Lage schiefwinklig verlaufenden Überlappungsbereich (10) aufweisen, welcher sich über die gesamte Höhe des Fluidbehälters (1) erstreckt und diese Nähte (17, 16) eine Breite von 1mm bis 6mm, vorzugsweise von 3mm aufweisen, und dass alle Lagen (11, 14, 12) vollflächig miteinander verleimt sind.

6. Fluidbehälter (1) nach einem der vorangehenden Ansprüche, **dadurch gekennzeichnet, dass** die Kraftpapierschicht (18) der Außenmateriallage (12) einseitig auf der dem Doseninnenraum (3) abgewandten Seitenfläche mit einer Polyolefin-Schicht (19) als Barriereverbund beschichtet ist und ein Flächengewicht von wenigstens 10 g/m2 und von höchstens 40 g/m2 aufweist und entweder Polyethylen oder Polyethylenterephthalat enthält.

7. Fluidbehälter (1) nach einem der vorangehenden Ansprüche, **dadurch gekennzeichnet, dass** die Kraftpapierschicht (18) der Außenmateriallage (12) einseitig auf der dem Doseninnenraum (3) abgewandten Seitenfläche wasserfest bedruckbar oder lackierbar ausgebildet ist.

8. Fluidbehälter (1) nach einem der Ansprüche 2 oder 6, **dadurch gekennzeichnet, dass** der Barriereverbund eine Polyolefin-Schicht (19) und wenigstens eine Schicht eines Haftvermittlers umfasst.

9. Fluidbehälter (1) nach einem der Ansprüche 2, 6 oder 8, **dadurch gekennzeichnet, dass** der Barriereverbund zusätzlich eine Schicht aus Aluminium umfasst und ein Flächengesamtgewicht von wenigstens 60 g/m2 und von höchstens 130 g/m2 aufweist.

10. Fluidbehälter (1) nach einem der Ansprüche 2, 6, 8 oder 9, **dadurch gekennzeichnet, dass** der Barriereverbund zusätzlich eine Schicht aus Ethylen- Vinylalkohol-Copolymer umfasst und ein Flächengesamtgewicht von wenigstens 50 g/m2 und von höchstens 100 g/m2 aufweist.

11. Fluidbehälter (1) nach einem der Ansprüche 2, 6 oder 8-10, **dadurch gekennzeichnet, dass** der Barriereverbund der äussersten Lage (12) eine Schicht aus Polyvinylalkohol umfasst und ein Flächengesamtgewicht von wenigstens 50 g/m2 und von höchstens 100 g/m2 aufweist.

12. Fluidbehälter (1) nach einem der vorhergehenden Ansprüche, **dadurch gekennzeichnet, dass** eine jeweilige Kraftpapierschicht (18) ein Flächengewicht von wenigstens 60 g/m2 und von höchstens 180 g/m2 aufweist und das Bodenelement (4) und/oder das Deckelelement (5) aus Metall, vorzugsweise aus Aluminium, bestehen.

13. Verfahren zur bedarfsweisen, zeitgerechten Herstellung eines solchen Fluidbehälters, geeignet als Getränkedose (1), am Ort der Befüllung, wobei der Behälter- bzw. Dosenkörper (2) durch mindestens zwei Lagen (11, 12) von senkrecht zum zu erzeugenden Dosenkörper (2) gewickelten Umwicklungen aus Kartonverbund-Material aus Kraftpapier (18) erzeugt wird, wobei die Verbindungsnähte (15, 16) der Umwicklungen an unterschiedlichen Stellen des Dosenumfanges liegen, **dadurch gekennzeichnet, dass** die Randbereiche der Umwicklungen des Kartonverbund-Materials für die innerste Lage (11) auf Stoss oder durch dreilagige Überlappung aneinander gefügt werden, unter dichtem Zusammenschweissen der Barriereschichten, die sich auf der Innenseite der gewickelten Lage befinden dieselben einige Millimeter überragen, indem deren zur gewickelten Lage radialen Abwinkelungen verschweisst und hernach auf die gewickelte Lage umgelegt werden, und die Randbereiche jeder weiteren Lage (12,14) in Wickelrichtung entweder über ihre Dicke schiefwinklig oder in eine Stufe (21) geschliffen oder geschnitten werden, sodass sich diese Randbereiche formschlüssig überlappen und ihre Dicke der Dicke des jeweiligen Kartonverbund-Materials entspricht, und die mehreren Lagen von Umwicklungen zeitgleich und örtlich zurückversetzt aufeinander aufgewickelt werden, sodass die Nähte an unterschiedlichen Umfangspositionen zu liegen kommen, und aus dem so erzeugten Endlosrohr (27) hernach rechtwinklig zur Wicklungsachse Rohrabschnitte (28) gewünschter Länge als Dosenkörper (2) geschnitten werden, und eine Seite (6) dieser Dosenkörper (2) mit einem einsetzbaren Bodenelement (4) ausgerüstet werden, dessen Randbereich (41) dichtend mit dem Rand (42) des Dosenkörpers (2) zusammengekrempelt wird, und hernach die Dose (1) befüllt wird und schliesslich ein Deckelelement (5) in gleicher Weise wie das Bodenelement (4) mit dem Rand des Dosenkörpers eingekrempelt wird.

14. Verfahren nach Anspruch 13, **gekennzeichnet durch** folgende Schritte:
a. Abrollen von wenigstens zwei Rollen von Kartonverbund-Material (11,14,12) und Beschichten der beiden Seiten der beiden Material-Bahnen mit Leim (22);
b. für nicht auf Stoss zu wicklende Lagen Zuschneiden oder Zuschleifen der Längsränder der Bahnen aus Kartonverbund-Material (11,14,12) in je eine Schräge (44) oder eine Stufe (21), sodass beim Überlappen der beiden Längsränder durch Rollen auf einen Stahldorn (23) dieselben formschlüssig aufeinanderliegen und der Überlappungsbereich (45) nicht dicker als die Materialbahn selbst ausfällt;
c. Zuführen und Entlangziehen der innersten Lage (11) des Kartonverbund-Materials längs eines stationären, zylinderförmigen Stahldoms (23) und Umwickeln desselben in Umfangsrichtung auf einen Stoss in einer Maschinenstation, mittels Durchlaufen des Kartonverbund-Materials (25) zwischen Stahldorn (23) und mehreren anschmiegenden Rollen (24) mit je Uförmigem Querschnitt, welche passgenau auf einem Umfangsbereich des Stahldoms (23) ablaufen, und Zusammenschweissen der Barrierverbundschichten, die aus dem Stoss herausragen und Aufleimen der aufeinanderliegenden, verschweissten und abstehenden Barriereschichten auf die Aussenseite der Wicklung sowie Anpressen mittels Anpressrollen (40), mit zeitgleichem örtlich wenig zurückversetztem Zuführen und Entlangziehen der zweiten Lage (14) und dritten Lage (12) von Kartonverbund-Material (25) in derselben Maschinenstation längs des stationären, zylinderförmigen Stahldorns (23) und dabei Umwickeln der ersten gewickelten Lage in Umfangsrichtung mittels Durchlaufen des Kartonverbund-Materials (25) zwischen der ersten Wickellage auf dem Stahldom (23) und mehreren anschmiegenden Rollen (24) mit je U-förmigem Querschnitt, und Umwickeln der zweiten gewickelten Lage in Umfangsrichtung mittels Durchlaufen des Kartonverbund-Materials (25) zwischen der zweiten Wickellage auf dem Stahldorn (23) und den gleichen mehreren anschmiegenden Rollen (24) mit je U-förmigem Querschnitt, welche passgenau auf einem Umfangsbereich jeweils gewickelten Lage auf dem Stahldoms (23) ablaufen, sodass sich die Randbereiche der Materialbahn (25) formschlüssig überlappen,
d. Wahlweise zeitgleiches örtlich wenig zurückversetztes Zuführen einer weiteren Lage genau wie unter c. in derselben Maschinenstation;
e. Weiterbefördern des nun zu einem Endlosrohr (27) gewickelten mehrlagigen Kartonverbund-Materials über einen Endabschnitt des Stahldoms (23) in eine getaktet hin und her fahrbare Guillotine (26), welche beim Mitfahren mit dem Rohr (27) an gewünschten Stellen dieses in Rohrabschnitte (28) gewünschter Länge schneidet, oder aber Weiterbefördern in eine Multi-Rundmessermaschine mit getaktet hin und her fahrbarem Schlitten mit mehreren Rundmessern, zum gleichzeitigen Ausschneiden mehrerer Rohrabschnitte gewünschter Länge aus dem zugeführten Endlosrohr (27),
f. Ausformen von auskragenden Rändern (42) an den offenen Rohrabschnitten (28) durch Einwirken von rotierenden Spreizwerkzeugen von beiden Seiten her und Bestreichen der aufgespreizten Ränder (42) mit einem Dispersionskleber in Form eines flüssigen Polyethylens PE oder eines anderen schnell abbindenden und lebensmittelkonformen Klebers, damit keine Feuchtigkeit ins Innere der Kraftpapierschicht eindringen kann;
g. Einordnen der Rohrabschnitte (28) in aufrechter Lage in eine Reihe in einem Förderkanal (29);
h. Durchfahren eines Karussells (30), an welchem ein Automat (32) aus einem Zufuhrmagazin (31) je ein vereinzeltes Bodenelement (4) in die oben offene Seite jedes Rohrabschnitts (28) einsetzt und seinen äusseren, radial auslaufenden Rand in radialer Richtung um den Randbereich des offenen Rohrabschnittes (28) dichtend einbördelt,
i. Stürzen der einseitig offenen Rohrabschnitte (38) im Förderkanal, sodass deren nun offene Seite oben liegt;
j. Durchfahren einer Karussell-Füllstation (33), welche jeden Rohrabschnitt (28) mit definierter Füllmenge befüllt,
k. Durchfahren eines Karussells (34), an welchem ein Automat (35) aus einem Zufuhrmagazin (36) ein vereinzeltes Deckelelement (5) mit Pullring-Verschluss in die oben offene Seite jedes gefüllten Rohrabschnitts (28) einsetzt und den äusseren, axial auslaufenden Rand des Deckelelementes (5) in radialer Richtung um den Randbereich des offenen Rohrabschnittes (28) dichtend einbördelt.

## Claims

1. A fluid container, consisting of at least two layers (11, 12) of cardboard composite material made of kraft paper (18) wound into a hollow cylinder as a can body (2) in a direction perpendicular to its axis, wherein the connecting seams (15, 16) of the at least two layers (11, 12) of cardboard composite material are in offset positions with respect to the periphery of the windings and one side (6) of the open hollow cylinder thus formed is sealed using a bottom element (4) and the other open side (7) of the hollow cylinder, i.e. can body, is sealable or sealed using a lid (5) with a seal in the same manner after being filled, **characterised in that** either its edges meet edge to edge in the direction of winding for the innermost layer while the innermost sheet of the innermost layer, i.e. the barrier sheet, overlaps the kraft paper (18) on its edges in the direction of winding, or else the peripheral areas of the innermost layer overlap altogether in the direction of winding, wherein in both cases the overlaps abut at their barrier sheets following rectangular angulation away from the wound layer (11) and are welded together and then folded over onto one side onto the layer and glued thereto while the peripheral areas of each further layer (14, 12) overlap in the direction of winding, wherein the overlapping areas (45) are cut or sanded into a slope (44) or forming a step (21) at an oblique angle over their thickness such that the overlapping areas are positively placed on top of one another and the overlapping areas (45) are not thicker than the thickness of the cardboard composite material itself.

2. The fluid container (1) of claim 1, **characterised in that** the wound innermost layer (11) has an inner seam (15) and is formed by a kraft paper sheet (18), which on one side, i.e. the side surface facing the can interior (3), is coated with a gas-tight and aroma-tight barrier composite (20), wherein said barrier sheet is made of polypropylene (PP), polyethylene (PE) or aluminium foil and overlaps the edges of the kraft paper sheet (18) in the direction of winding and is, following articulation on the edge, sealingly welded to the abutting articulation of the barrier sheet of the neighbouring edge and then folded over to the outer side of the wound layer, and the wound outer material layer (12) is formed by a kraft paper sheet (18) and its outer seam (16) is sealed with a sealing strip (46) running longitudinally to said outer seam (16).

3. The fluid container (1) of any one of the preceding claims, **characterised in that** the bottom element (4) has an outer edge rolled around an initially radially protruding edge of the overlapping layers of the hollow cylinder, i.e., can body (2), such that a tight roll-up, round in cross-section, of the hollow cylinder, i.e., can body (2), is formed along the axial edge of the hollow cylinder, i.e., can body (2), and **in that** the other open side (7) of the hollow cylinder, i.e., can body (2), is sealable or sealed using a lid element (5) with a seal in the same manner after being filled.

4. The fluid container (1) of any one of the preceding claims, **characterised in that** the seams (17, 16) of each material layer (14, 12) except the innermost layer (11) have an overlapping area (10) running in steps over the thickness of the layer, which extends over the entire height of the fluid container (1), and said seams (17, 16) have a width of 1mm to 6mm, preferably of 3mm, and **in that** all layers (11, 14, 12) are glued flush with one another.

5. The fluid container (1) of any one of the preceding claims, **characterised in that** the seams (17, 16) of each material layer (14, 12) except the innermost layer (11) have an overlapping area (10) running at an oblique angle over the thickness of the layer, which extends over the entire height of the fluid container (1), and said seams (17, 16) have a width of 1mm to 6mm, preferably of 3mm, and **in that** all layers (11, 14, 12) are glued flush with one another.

6. The fluid container (1) of any one of the preceding claims, **characterised in that** the kraft paper sheet (18) of the outer material layer (12) is coated by a polyolefin sheet (19) as a barrier composite on one side, i.e., the side surface facing away from the can interior (3), and has an area density of at least 10g/m² and of at most 40g/m² and contains either polyethylene or polyethylene terephthalate.

7. The fluid container (1) of any one of the preceding claims, **characterised in that** the kraft paper sheet (18) of the outer material layer (12) is formed to be waterproof for print or paint on one side, i.e., the side surface facing away from the can interior (3).

8. The fluid container (1) of any one of claims 2 or 6, **characterised in that** the barrier composite comprises a polyolefin sheet (19) and at least one sheet of an adhesion agent.

9. The fluid container (1) of any one of claims 2, 6, or 8, **characterised in that** the barrier composite additionally comprises a sheet made of aluminium and has an overall area density of at least 60g/m² and at most 130g/m².

10. The fluid container (1) of any one of claims 2, 6, 8, or 9, **characterised in that** the barrier composite additionally comprises a sheet made of ethylene-vinyl alcohol co-polymer and has an overall area density of at least 50g/m² and at most 100g/m².

11. The fluid container (1) of any one of claims 2, 6, or 8-10, **characterised in that** the barrier composite of the outermost layer (12) comprises a sheet made of polyvinyl alcohol and has an overall area density of at least 50g/m² and at most 100g/m².

12. The fluid container (1) of any one of the preceding claims, **characterised in that** a respective kraft paper sheet (18) has an area density of at least 60g/m² and at most 180g/m² and the bottom element (4) and/or the lid element (5) are made of metal, preferably aluminium.

13. A method of preparing such fluid container suitable as a beverage can (1) as required in due time at the location of filling, wherein the container, i.e., can, body (2) is produced by at least two layers (11, 12) of wraps made of cardboard composite material made of kraft paper (18) wound perpendicular to the can body (2) to be produced, wherein the connecting seams (15, 16) of the wraps are located at different sites of the can circumference, **characterised in that** the peripheral areas of the wraps of the cardboard composite material for the innermost layer (11) are put together edge to edge or by three-layer overlapping while tightly welding together the barrier sheets located on and projecting a few millimetres beyond the inner side of the wound layer by welding together their angulations radial to the wound layer and then folding them onto the wound layer, and the peripheral areas of each further layer (12, 14) are cut or sanded at an oblique angle or forming a step (21) at an oblique angle over their thickness in the direction of winding such that said overlapping areas positively overlap and their thicknesses are equal to the thickness of the respective cardboard composite material, and the several layers of wraps are wound upon one another at the same time and spatially set back such that the seams end up in different circumferential positions, and then tube sections (28) of desired lengths are cut out of the continuous tube (27) thus produced as can bodies (2) at a right angle to the axis of winding, and one side (6) of said can bodies (2) is each equipped with an insertable bottom element (4), the peripheral area (41) of which is sealingly rolled together with the edge (42) of the can body (2), and then the can (1) is filled and finally a lid element (5) is rolled in with the edge of the can body in the same manner as the bottom element (4).

14. The method of claim 13, **characterised by** the following steps:
a. unwinding at least two rollers of cardboard composite material (11, 14, 12) and coating the two sides of the two material webs with glue (22);
b. for layers not to be wound edge to edge, cutting or sanding the longitudinal edges of the webs made of cardboard composite material (11, 14, 12) into a slope (44) or step (21) each such that, when the two longitudinal edges are wound onto a steel spine (23), the same are positively placed on top of one another and the overlapping area (45) is not thicker than the thickness of the material web itself;
c. feeding and pulling the innermost layer (11) of the cardboard composite material along a stationary, cylindrical steel spine (23) and wrapping the same circumferentially onto an edge in a machine station by passing the cardboard composite material (25) between the steel spine (23) and multiple tight-fitting rollers (24) each having a U-shaped cross-section, which run on a circumferential area of the steel spine (23) in a positively fitting manner, and welding together the barrier composite sheets protruding from the edge and sizing the welded, projecting barrier sheets lying on top of each other onto the outer side of the winding as well as pressing on, using pressure rollers (40), while at the same time feeding in a spatially somewhat set back manner and pulling the second layer (14) and the third layer (12) of cardboard composite material (25) in the same machine station along the stationary, cylindrical steel spine (23) while wrapping the first wound layer circumferentially by passing the cardboard composite material (25) between the first winding layer on the steel spine (23) and multiple tight-fitting rollers (24) each having a U-shaped cross-section, and wrapping the second wound layer circumferentially by passing the cardboard composite material (25) between the second winding layer on the steel spine (23) and the same multiple tight-fitting rollers (24) each having a U-shaped cross-section, which run on a circumferential area of the steel spine (23) in a positively fitting manner, such that the peripheral areas of the material web (25) positively overlap;
d. alternatively, at the same time, feeding a further layer in a spatially somewhat set back manner as in c. in the same machine station;
e. advancing the multi-layered cardboard composite material now wound into a continuous tube (27) over an end section of the steel spine (23) into a guillotine (26) navigable back and forth in a timed manner, which, when travelling with the tube (27), cuts the same into tube sections (28) at desired sites, or advancing it into a machine having multiple circular blades with carriages navigable back and forth in a timed manner, for simultaneously cutting multiple tube sections of desired lengths out of the fed continuous tube (27);
f. Shaping projecting edges (42) on the open tube sections (28) by operating rotating expansion tools from both sides and applying dispersion adhesive in the shape of liquid polyethylene (PE) or another quick-setting, food-safe adhesive onto the expanded edges (42), so that no moisture can penetrate into the kraft paper sheet;
g. sorting the tube sections (28) in an upright position into a row in a conveyor channel (29);
h. travelling through a carousel (30), where a robot (32) inserts a singular bottom element (4) from a feeding magazine (31) into the open top side of each tube section (28) and sealingly crimps its outer, radial edge around the peripheral area of the open tube section (28) in a radial direction;
i. flipping the tube sections (28) open on one side in the conveyor channel such that their now open side is on top;
j. travelling through a carousel filling station (33), which fills each tube section (28) with a defined filling level;
k. travelling through a carousel (34), where a robot (35) inserts a singular lid element (5) with a pull-ring seal from a feeding magazine (36) into the open top side of each filled tube section (28) and sealingly crimps the outer, axial edge of the lid element (5) around the peripheral area of the open tube section (28) in a radial direction.

## Revendications

1. Récipient pour fluides, constitué d'au moins deux couches (11, 12) de matériau composite de carton en papier kraft (18) enroulées en un cylindre creux en tant que corps de boîte (2) dans une direction perpendiculaire à son axe, les joints (15, 16) des au moins deux couches (11, 12) de matériau composite de carton étant décalés par rapport à la périphérie des enroulements et un côté (6) du cylindre creux ouvert ainsi formé étant fermé par un élément de fond (4) et l'autre côté ouvert (7) du cylindre creux, c'est-à-dire du corps de boîte, pouvant être fermé ou étant fermé de la même manière après le remplissage par un couvercle (5) avec une fermeture, **caractérisé en ce que** soit ses bords se rejoignent bout à bout dans le sens de l'enroulement pour la couche la plus intérieure tandis que la feuille la plus intérieure de la couche la plus intérieure, c'est-à-dire la feuille de barrière, recouvre le papier kraft (18) à ses bords dans le sens de l'enroulement, soit les zones périphériques de la couche la plus intérieure se chevauchent entièrement dans le sens de l'enroulement, où dans les deux cas, les chevauchements s'appuient sur leurs feuilles de barrière dans un angle rectangulaire à partir de la couche enroulée (11) et sont soudés ensemble et ensuite repliés sur un côté sur la couche et collés à celle-ci, tandis que les zones périphériques de chaque couche suivante (14, 12) se chevauchent dans le sens de l'enroulement, les zones de chevauchement (45) étant coupées ou rectifiées le long de leur épaisseur dans un angle oblique pour former un biseau (44) ou un gradin (21), de sorte que les zones de chevauchement sont placées les unes sur les autres dans un engagement positif et que les zones de chevauchement (45) ne sont pas plus épaisses que l'épaisseur du matériau composite de carton lui-même.

2. Récipient pour fluides (1) selon la revendication 1, **caractérisé en ce que** la couche la plus intérieure enroulée (11) présente un joint intérieur (15) et est formée par une couche de papier kraft (18) qui est revêtue d'un composite barrière (20) étanche aux gaz et aux arômes sur une surface latérale tournée vers l'intérieur de la boîte (3), cette couche de barrière consistant en polypropylène PP, en polyéthylène PE ou en une feuille d'aluminium et recouvrant les bords de la couche de papier kraft (18) dans le sens de l'enroulement et, après un pliage au niveau de la jointure, étant soudé de manière étanche au pliage adjacent de la couche barrière de la jointure adjacent et étant ensuite replié sur l'extérieur de la couche enroulée, et **en ce que** la couche de matériau extérieur enroulée (12) est formée par une couche de papier kraft (18) et son joint extérieure (16) est scellé par une bande d'étanchéité (46) qui s'étend le long de ce joint extérieure (16).

3. Récipient pour fluides (1) selon l'une des revendications précédentes, **caractérisé en ce que** l'élément de fond (5) présente un bord extérieur qui est serti de manière étanche autour d'un bord d'abord en saillie de manière radiale des couches superposées du cylindre creux, c'est-à-dire du corps de boîte (2), de sorte qu'un pliure (43) étanche et rond en section transversale est formé le long du bord axial du cylindre creux, c'est-à-dire du corps de boîte (2), et **en ce que** l'autre côté ouvert (7) du cylindre creux, c'est-à dire du corps de boîte (2), peut être fermé ou est fermé de la même manière avec un élément de couvercle (6) avec une fermeture après le remplissage.

4. Récipient pour fluides (1) selon l'une des revendications précédentes, **caractérisé en ce que** les joints (17, 16) de chaque couche de matériau (14, 12), à l'exception de la couche la plus intérieure (11), présentent une zone de chevauchement (10) qui s'étend à gradins sur l'épaisseur de la couche et qui s'étend sur toute la hauteur dudit récipient pour fluides (1), et **en ce que** ces joints (17, 16) ont une largeur de 1 mm à 6 mm, de préférence de 3 mm, et **en ce que** toutes les couches (11, 14, 12) sont collées ensemble sur toute leur surface.

5. Récipient pour fluides (1) selon l'une des revendications précédentes, **caractérisé en ce que** les joints (17, 16) de chaque couche de matériau (14, 12), à l'exception de la couche la plus intérieure (11), présentent une zone de chevauchement (10) qui s'étend sur l'épaisseur de la couche dans un angle oblique et qui s'étend sur toute la hauteur dudit récipient pour fluides (1), et **en ce que** ces joints (17, 16) ont une largeur de 1 mm à 6 mm, de préférence de 3 mm, et **en ce que** toutes les couches (11, 14, 12) sont collées ensemble sur toute leur surface.

6. Récipient pour fluides (1) selon l'une des revendications précédentes, **caractérisé en ce que** la couche de papier kraft (18) de la couche de matériau extérieur (12) est revêtue, sur la surface latérale opposée à l'intérieur du récipient (3), d'une couche de polyoléfine (19) en tant que composite de barrière et présente un poids par unité de surface d'au moins 10 g/m2 et de 40 g/m2 au maximum et contient soit du polyéthylène soit du polyéthylène téréphtalate.

7. Récipient pour fluides (1) selon l'une des revendications précédentes, **caractérisé en ce que** la couche de papier kraft (18) de la couche de matériau extérieur (12) est conçue pour être imprimable ou vernissable de manière imperméable sur la surface latérale opposée à l'intérieur de la boîte (3).

8. Récipient pour fluides (1) selon l'une des revendications 2 ou 6, **caractérisé en ce que** le composite de barrière comprend une couche de polyoléfine (19) et au moins une couche d'un agent adhésif.

9. Récipient pour fluides (1) selon l'une des revendications 2, 6 ou 8, **caractérisé en ce que** le composite de barrière comprend en outre une couche d'aluminium et présente un poids total par unité de surface d'au moins 60 g/m2 et de 130 g/m2 au maximum.

10. Récipient pour fluides (1) selon l'une des revendications 2, 6, 8 ou 9, **caractérisé en ce que** le composite de barrière comprend en outre une couche de copolymère éthylène-alcool vinylique et présente un poids total par unité de surface d'au moins 50 g/m2 et de 100 g/m2 au maximum.

11. Récipient pour fluides (1) selon l'une des revendications 2, 6 ou 8 à 10, **caractérisé en ce que** le composite de barrière de la couche la plus extérieure (12) comprend une couche d'alcool polyvinylique et présente un poids total par unité de surface d'au moins 50 g/m2 et de 100 g/m2 au maximum.

12. Récipient pour fluides (1) selon l'une des revendications précédentes, **caractérisé en ce qu'**une couche respective de papier kraft (18) présente un poids par unité de surface d'au moins 60 g/m2 et de 180 g/m2 au maximum et **en ce que** l'élément de fond (4) et/ou l'élément de couvercle (5) consistent en métal, de préférence en aluminium.

13. Procédé pour la fabrication d'un tel récipient pour fluides, se prêtant comme boîte de boisson (1), tel que requis en temps voulu au lieu de remplissage, dans lequel le corps de récipient ou de boîte (2) est fabriqué par au moins deux couches (11, 12) d'enveloppes en matériau composite de carton en papier kraft (18) enroulées perpendiculairement au corps de boîte (2) à fabriquer, les joints (15, 16) des enveloppes étant situés à différents endroits périphériques de la boîte, **caractérisé en ce que** les zones de bord des enveloppes en matériau composite de carton pour la couche la plus intérieure (11) sont reliées entre elles bout à bout ou en chevauchant trois couches, en soudant de manière étanche les couches de barrières qui se trouvent sur la face intérieure de la couche enroulée et dépassent celle-ci de quelques millimètres, en soudant leurs pliages radiaux par rapport à la couche enroulée et en les repliant ensuite sur celle-ci, et les zones de bord de chaque autre couche (12, 14) sont rectifiées ou coupées dans le sens de l'enroulement soit dans un angle oblique le long de leur épaisseur, soit en un gradin (21) de telle sorte que ces zones de bord se recouvrent dans un engagement positif et que leur épaisseur corresponde à l'épaisseur du matériau composite de carton respectif, et les différentes couches d'enveloppes sont enroulées simultanément les unes sur les autres et décalées les unes par rapport aux autres de telle sorte que les joints viennent se placer à des positions périphériques différentes, et **en ce que** des sections de tube (28) de longueur souhaitée sont ensuite découpées comme corps de boîte (2) du tube sans fin (27) ainsi produit, perpendiculairement à l'axe d'enroulement, et un côté (6) de ces corps de boîte (2) est équipé d'un élément de fond (4) insérable, dont la zone de bord (41) est sertie de manière étanche avec le bord (42) du corps de boîte (2), puis la boîte (1) est remplie et enfin un élément de couvercle (5) est serti de la même manière que l'élément de fond (4) avec le bord du corps de boîte.

14. Procédé selon la revendication 13, **caractérisé par** les étapes suivantes:
a. dérouler au moins deux rouleaux de matériau composite de carton (11, 14, 12) et revêtir des deux côtés les deux bandes de matériau avec de la colle (22);
b. pour les couches qui ne doivent pas être enroulées bout à bout, couper ou rectifier les bords longitudinaux des bandes de matériau composite de carton (11, 14, 12) en un biseau (44) ou en un gradin (21), de sorte que, lors du chevauchement des deux bords longitudinaux par enroulement sur un mandrin en acier (23), ils se superposent dans un engagement positif et que la zone de chevauchement (45) ne soit pas plus épaisse que la bande de matériau elle-même;
c. apporter et étirer la couche la plus intérieure (11) du matériau composite de carton le long d'un mandrin en acier cylindrique fixe (23) et enrouler ceci dans un sens circonférentiel sur une jointure dans une station de machine, en faisant passer le matériau composite de carton (25) entre le mandrin en acier (23) et une pluralité de rouleaux d'emboîtement (24), ayant chacun une section transversale en forme de U, qui se déroulent dans un ajustement serré sur une zone périphérique du mandrin en acier (23), et souder ensemble les couches composites de barrière qui dépassent la jointure et coller les couches de barrière superposées, soudées et en saillie sur l'extérieur de l'enroulement et presser au moyen de rouleaux de pression (40), tout en apportant et étirant simultanément et de manière localement légèrement décalée la deuxième couche (14) et de la troisième couche (12) de matériau composite du matériau composite de carton (25) dans la même station de machine le long du mandrin en acier cylindrique fixe (23), et envelopper ainsi la première couche enroulée dans la direction circonférentielle en faisant passer le matériau composite de (25) entre la première couche enroulée sur le mandrin en acier (23) et plusieurs rouleaux d'emboîtement (24), ayant chacun une section transversale en forme de U, et la deuxième couche enroulée dans la direction circonférentielle en faisant passer le matériau composite de (25) entre la deuxième couche enroulée sur le mandrin en acier (23) et la même pluralité de rouleaux d'emboîtement (24), chacun ayant une section transversale en forme de U, qui se déroulent dans un ajustement serré sur une zone circonférentielle de chaque couche enroulée sur le mandrin en acier (23), de sorte que les zones de bord de la bande de matériau (25) se chevauchent dans un engagement positif ;
d. optionnellement, apporter simultanément une autre couche à un endroit légèrement décalé, exactement comme sous c. dans la même station de machine;
e. transporter le matériau composite de carton multicouche, qui est maintenant enroulé pour former un tube sans fin (27), à travers une section d'extrémité du mandrin en acier (23) dans une guillotine (26) qui peut être déplacée en avant et en arrière de manière synchronisée et qui, en se déplaçant avec le tube (27), coupe ce dernier à des points souhaités en sections de tube (28) de longueur souhaitée, ou transporter dans une machine avec une pluralité de couteaux ronds avec un chariot équipé de plusieurs couteaux ronds qui peut être déplacé en avant et en arrière de manière synchronisée, pour couper simultanément plusieurs sections de tube d'une longueur souhaitée du tube sans fin (27) fourni;
f. former des bords saillants (42) sur les sections de tube ouvertes (28) par l'action d'outils d'écartement rotatifs des deux côtés et revêtir lesdits bords saillants (42) avec un adhésif de dispersion sous la forme d'un polyéthylène PE liquide ou d'un autre adhésif à prise rapide et conforme aux normes alimentaires, de sorte qu'aucune humidité ne puisse pénétrer à l'intérieur de la couche de papier kraft;
g. placer les sections de tube (28) en position verticale en une rangée dans un passage de transport (29);
h. passer par un carrousel (30), dans lequel un automate (32) insère un seul élément de fond (4) provenant d'un magasin d'apport (31) dans le côté ouverte vers le haut de chaque section de tube (28) et sertit de manière étanche son bord extérieur s'étendant radialement dans la direction radiale autour de la zone de bord de la section de tube ouverte (28);
i. retourner les sections de tuyau (28) ouvertes d'un côté dans le passage de transport de sorte que leur côté maintenant ouvert est orienté vers le haut;
j. passer par une station de remplissage à carrousel (33) qui remplit chaque section de tube (28) avec une quantité de remplissage définie;
k. passer par un carrousel (34), dans lequel un automate (35) insère un seul élément de couvercle (5) avec une fermeture à anneau de traction provenant d'un magasin d'apport (36) dans le côté ouvert vers le haut de chaque section de tube remplie (28) et sertit de manière étanche le bord extérieur s'étendant axialement de l'élément de couvercle (5) dans la direction radiale autour de la zone de bord de la section de tube ouverte (28).
